# EUROPEAN PATENT APPLICATION

(11) **EP 2 620 865 A2**
(43) Date of publication of application: **31.07.2013**
(21) Application number: 13152094.2
(22) Date of filing: 21.01.2013
(51) Int. Cl.: G06F 3/14, G06F 1/16, G09G 5/00, H04N 5/445

(54) **Display apparatus and control method thereof**

(30) Priority: 27.01.2012 KR 20120008196; 31.01.2012 KR 20120009409; 31.01.2012 KR 20120009691; 26.10.2012 KR 20120119928
(71) Applicant: Samsung Electronics Co., Ltd., Gyeonggi-do 443-742 (KR)
(72) Inventor: Na, Kee-wook, Suwon-si (KR); Kang, Chun-un, Seoul (KR); Kim, Moon-su, Goesan-gun (KR); Lee, Dae-hyun, Hwaseong-si (KR); Kim, Jeong-gon, Gwangmyeong-si (KR); Choi, Jong-il, Seoul (KR)
(74) Representative: Waddington, Richard

(57) **Abstract**

A display apparatus (100) and a control method thereof are provided, the display apparatus includes: a display (130) which displays an image thereon; a first image processor (120) which processes an image signal; a connector (140) which is connectable to an upgrading apparatus (200) that is provided to upgrade the display apparatus; and a first controller (170) which executes a first application program and displays a first image signal corresponding to the execution of the first application program on the display (130), and when receiving a second image signal, corresponding to an execution of a second application program executed by the upgrading apparatus, from the upgrading apparatus through the connector, controls the display to display the second image signal together with the first image signal.

## Description

### BACKGROUND

### 1. Field

Apparatuses and methods consistent with the exemplary embodiments relate to a display apparatus and a control method thereof, and more particularly, to a display apparatus and a control method thereof which is connected to an external upgrading apparatus to use functions of the upgrading apparatus.

### 2. Description of the Related Art

A display apparatus processes image signals supplied by an external image supply source or image data stored therein according to a series of signal processing operations, and displays an image on a display panel based on the processed image signals or image data. A representative example of the display apparatus is a TV. A related art TV only outputs a received broadcasting signal through a screen, but nowadays various application programs may be used through the TV with the development of technology and to meet consumers' demand.

A user may purchase a new display apparatus to use new hardware/software functions through the display apparatus, and this can be burden to a user. Also, physical replacement of hardware configurations of the display apparatus, i.e., circuit boards, is not easy from the perspectives of manufacturing and usage. New software requires hardware that is designed for such software, and the replacement of hardware is difficult.

Even if a user intends to mount an external device in the display apparatus for use, it is difficult to equip all hardware configurations necessary for the display apparatus.

### SUMMARY

Accordingly, one or more exemplary embodiments provide a display apparatus and a control method which displays images from the display apparatus and an upgrading apparatus connected thereto by a simple manipulation of the display apparatus.

According to the present invention there is provided an apparatus and method as set forth in the appended claims. Other features of the invention will be apparent from the dependent claims, and the description which follows.

An exemplary embodiment may provide a display apparatus and a control method thereof which receives an application program from an external server through a communication function of the display apparatus and uses the application program through the upgrading apparatus.

An exemplary embodiment may also provide a display apparatus and a control method thereof which performs a normal function even if an error which has occurred from the upgrading apparatus is not yet corrected.

According to an exemplary embodiment, a display apparatus is provided, the display apparatus includes: a display which displays an image thereon; a first image processor which processes an image signal; a connector which is connectable to an upgrading apparatus that is provided to upgrade the display apparatus; and a first controller which executes a first application program and displays a first image signal corresponding to the execution of the first application program on the display, and when receiving a second image signal, corresponding to an execution of a second application program executed by the upgrading apparatus, from the upgrading apparatus through the connector, controls the display to display the second image signal together with the first image signal.

The first controller may transmit data necessary for the execution of the second application program to the upgrading apparatus, when the upgrading apparatus is connected through the connector.

The first controller may receive data necessary for the execution of the first application program from the upgrading apparatus and execute the first program, when the upgrading apparatus is connected through the connector.

The first image processor may combine the first image signal and the second image signal, and process the combined image signal to display on the display.

The upgrading apparatus may include a second controller which executes the second application program; and a second image processor which processes a second image signal corresponding to the execution of the second application program to display an image on the display based on the processed second image signal, and the second controller may transmit the second image signal processed by the second image processor, to the display apparatus when the upgrading apparatus is connected to the display apparatus through the connector.

The first and second application programs may be identical application programs.

The display apparatus may also include a user interface (UI) generator which generates a menu screen displaying options for a screen combination method of the first and second image signals; and a user input which is used to input the option, wherein the screen combination type comprises at least one of picture-in-picture (PIP), picture-on-picture (POP) and picture-by-picture (PBP).

The display apparatus may also include a communicator which communicates with an external server and receives an application program, wherein when the upgrading apparatus is connected and requests the application program, the first controller transmits one of inherent IDs of the display apparatus and the upgrading apparatus to the external server through the communicator and requests authorization for receiving the application program, and transmits the received application program to the upgrading apparatus.

The first controller may identify whether the upgrading apparatus stores a second inherent ID therein for identifying the upgrading apparatus, and if so, transmit the stored second inherent ID to the external server through the communicator.

A control right to the application program, which has been received from the external server and authorized through the second inherent ID, may be retained by the upgrading apparatus.

The first controller may be granted the control right to the application program by the upgrading apparatus and execute the application program based on the granted control rig ht.

The display apparatus may also include a storage which stores therein a first inherent ID for identifying the display apparatus, wherein the first controller transmits the first inherent ID stored in the storage to the external server through the communicator if the upgrading apparatus does not store the second inherent ID therein.

The control right to the application program, which has been received from the external server and authorized through the first inherent ID is retained by the first controller, and the upgrading apparatus is granted the control right to the application program by the external server and executes the application program.

The application program which is transmitted by the external server may be stored in the upgrading apparatus.

The first controller may control the connector to monitor an operation state of the upgrading apparatus, and when it is determined that there is an error in the operation of the upgrading apparatus, control the first image processor to process the image signal.

The first controller may control the connector to periodically receive a predetermined signal from the upgrading apparatus, and if no signal is transmitted from the upgrading apparatus, determine that there is an error in the upgrading apparatus.

The first controller may control the connector to periodically transmit a predetermined signal to the upgrading apparatus, and if no response signal is received with respect to the transmitted signal, determine that there is an error in the upgrading apparatus.

The first controller may execute at least one application program for performing a function of the upgrading apparatus if the error of the upgrading apparatus is detected.

The first controller may control the connector to transmit an image signal from at least one image supply source to the upgrading apparatus and to receive the image signal processed by the upgrading apparatus, if it is detected that the error of the upgrading apparatus has been corrected,.

The first controller may control the display to display a user interface (UI) regarding the error of the upgrading apparatus.

The display apparatus may also include a communicator which communicates with a management server, wherein the first controller controls the communicator to notify the management server of the error of the upgrading apparatus.

According to an exemplary embodiment, a control method of a display apparatus is provided, the control method includes: connecting an upgrading apparatus which is provided to upgrade the display apparatus; executing a first application program and displaying a first image signal corresponding to the execution of the first application program; receiving a second image signal, corresponding to an execution of a second application program that is executed by the upgrading apparatus, from the connected upgrading apparatus; and displaying the second image signal together with the first image signal.

The control method may also include transmitting data necessary for executing the second application program.

The control method may also include receiving data necessary for the execution of the first application program from the connected upgrading apparatus.

The control method may also include processing a first image signal corresponding to the execution of the first application program; and combining the first image signal and the second image signal.

The receiving the second image signal further may include processing a second image signal, corresponding to the execution of the second application program, to display on the display apparatus, by the upgrading apparatus.

The first and second application programs may be identical application programs.

The control method may also include generating and displaying a menu screen which displays an option for a screen combination type for the first and second image signals; and combining and displaying the first and second image signals by receiving a user's selection and through a screen combination method corresponding to the user's selection, wherein the screen combination type includes at least one of Picture-in-Picture (PIP), Picture-on-Picture (POP), and Picture-by-Picture (PBP).

The control method may also include receiving a request for an application program from the connected upgrading apparatus; transmitting one of inherent IDs of the display apparatus and the upgrading apparatus to an external server and requesting authorization for receiving the application program; and receiving the application program from the external server and storing the application program in the upgrading apparatus.

The control method may also include identifying whether the upgrading apparatus stores therein a second inherent ID for identifying the upgrading apparatus, and the requesting for authorization comprises transmitting the second inherent ID to the external server if the upgrading apparatus stores the second inherent ID therein.

The control method may also include a control right to the application program, which has been received from the external server and authorized through the second inherent ID, is retained by the upgrading apparatus.

The display apparatus may be granted the control right to the application program by the upgrading apparatus and executes the application program.

The display apparatus may store a first inherent ID for identifying the display apparatus, and the requesting for authorization comprises transmitting the stored first inherent ID to the external server if the upgrading apparatus does not store the second inherent ID therein.

The control right to the application program which has been received from the external server and authorized through the first inherent ID may be retained by the controller, and the upgrading apparatus may be granted the control right to the application program from the display apparatus and execute the application program.

The control method may also include: monitoring an operation state of the upgrading apparatus; processing the image signal by the display apparatus if it is determined that there is an error in the operation of the upgrading apparatus; and displaying the processed image signal.

The monitoring may include periodically receiving a predetermined signal from the upgrading apparatus; and determining that there is an error in the upgrading apparatus if no signal is transmitted from the upgrading apparatus.

The monitoring may include periodically transmitting a predetermined signal to the upgrading apparatus; receiving a response signal with respect to the transmitted signal; and determining that there is an error in the upgrading apparatus if the response signal is not transmitted.

The processing the image signal by the display apparatus may include executing at least one application program by the display apparatus to perform a function of the upgrading apparatus.

The control method may also include detecting that the upgrading apparatus is restored from the error; transmitting an image signal from an image supply source to the upgrading apparatus; and receiving the processed image signal from the upgrading apparatus.

The control method may also include displaying a UI regarding the error of the upgrading apparatus.

The control method may also include notifying a managing server of the error of the upgrading apparatus.

According to an exemplary embodiment, a display apparatus is provided, the display apparatus includes: an interface which receives an upgrading apparatus that is provided to upgrade the display apparatus; and a controller which receives a second image signal of an application program that is executed by the upgrading apparatus from the upgrading apparatus through the interface and controls the display apparatus to display the second image signal together with a first image signal.

The first image signal may correspond to another application program executed in the display apparatus.

The controller may transmit and receives data necessary for the execution of the application program to and from the upgrading apparatus when the upgrading apparatus is connected to the interface.

The display apparatus may also include: a communicator which communicates with an external server, and when the upgrading apparatus is connected to the interface and requests the application program, the controller requests authorization for at least one of receiving the application program from the external server and transmitting the application program to the upgrading apparatus.\

The controller may monitor an operation state of the upgrading apparatus through the interface, and when it is determined that there is an error in the operation of the upgrading apparatus, the controller may control an image processor in the display apparatus to process the second image signal.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 illustrates a display apparatus and an upgrading apparatus according to an exemplary embodiment;

FIG. 2 is a control block diagram of a display apparatus and an upgrading apparatus according to an exemplary embodiment;

FIG. 3 illustrates an example of the display apparatus which displays a plurality of images;

FIG. 4 illustrates another type of the display apparatus and the upgrading apparatus according to an exemplary embodiment;

FIG. 5 illustrates another type of the display apparatus and the upgrading apparatus according to an exemplary embodiment;

FIG. 6 is a control flowchart showing an image displaying operation of the display apparatus in FIG. 2;

FIG. 7 is a control flowchart showing an image displaying operation of the display apparatus in FIG. 3;

FIG. 8 is a control flowchart showing an image displaying operation of the display apparatus in FIG. 4;

FIG. 9 is a control block diagram of a display apparatus according to an exemplary embodiment;

FIG. 10 is a control flowchart of the display apparatus according to an exemplary embodiment;

FIG. 11 illustrates a part of the control flowchart in FIG. 10;

FIG. 12 is a block diagram of a display system according to an exemplary embodiment;

FIG. 13 is a block diagram of a display apparatus and an upgrading apparatus according to an exemplary embodiment;

FIGS. 14 and 15 illustrate an example of a method of upgrading an image processing operation of the display apparatus by the upgrading apparatus in the display system in FIG. 13;

FIGS. 16 and 17 illustrate a screen displayed by a display unit;

FIG. 18 is a flowchart showing a control method of the display apparatus in FIG. 13 according to an exemplary embodiment; and

FIG. 19 is a flowchart showing a control method of the upgrading apparatus in FIG. 13 according to an exemplary.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

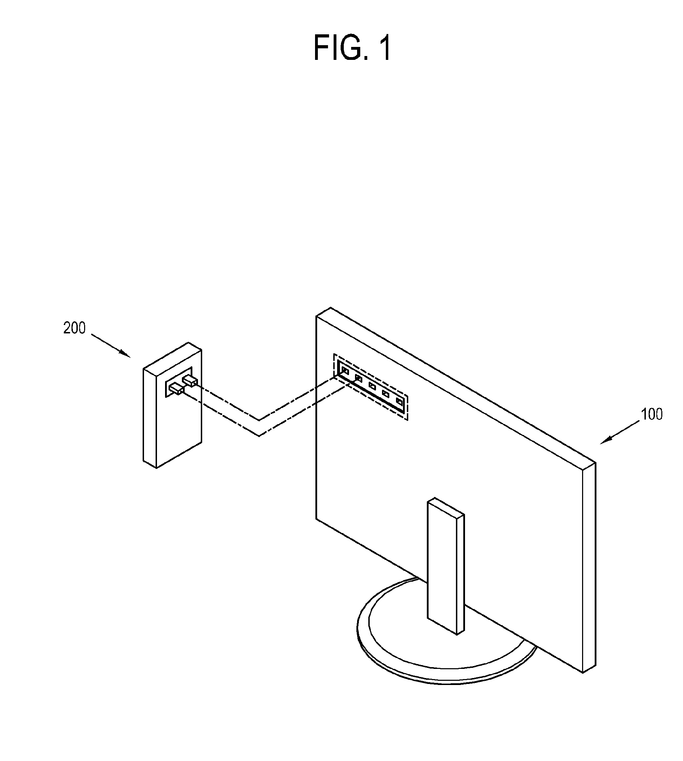

FIG. 1 briefly illustrates a display apparatus and an upgrading apparatus according to an exemplary embodiment.

A display apparatus according to an exemplary embodiment may process image signals supplied by an external image supply source (not shown) or image data stored therein according to a predetermined image processing operation to display an image, and receive from an external server and execute various application programs for games, education, etc. As shown therein, the display apparatus 100 may have the upgrading apparatus 200 mounted therein to use hardware/software functions of the upgrading apparatus.

In an exemplary embodiment, the display apparatus is implemented as a TV, but the inventive concept is not limited to the foregoing case, and may apply to various types of implementations which display images.

The upgrading apparatus is provided to upgrade existing hardware/software configurations of the connected display apparatus, and may include a memory to store application programs therein and a central processing unit (CPU) to execute application programs. The upgrading apparatus may provide functions that are not supported by the display apparatus. For example, the upgrading apparatus may execute an application that cannot be executed by the display apparatus, and display the application on a display unit of the display apparatus. The upgrading apparatus may provide a function of improving existing operations of the display apparatus. For example, the upgrading apparatus may include upgraded configurations compared to the hardware/software configurations of the display apparatus, and process an image signal through its upgraded configurations and transmit an image with improved quality to the display apparatus.

The upgrading apparatus may be connected to the display apparatus through a connector provided in a rear surface of the display apparatus as in FIG. 1, but may be connected thereto by known wired/wireless communication methods to exchange signals therewith.

According to an exemplary embodiment, the display apparatus may be implemented as a smart TV. The smart TV may receive and display a broadcasting signal in real-time, and has a web browsing function and displays a broadcasting signal in real-time, and at the same time, searches various contents through the Internet for consumption, and provides convenient user environment. The smart TV includes an open-ended software platform and provides a user with interactive service. Accordingly, the smart TV may provide various contents, e.g., an application providing a predetermined service, through the open-ended software platform. Such applications include an application program providing various types of services, e.g., social networking service (SNS), finance, news, weather, maps, music, movies, games, e-books, etc. If the display apparatus is implemented as a smart TV, it may be functionally divided into a first block (not shown) which receives and processes a broadcasting signal and an image signal; and a second block (not shown) which provides an Internet service function through a web browser and an application through an open-ended software platform.

The upgrading apparatus may upgrade functions of the second block of the divided blocks of the display apparatus. If the upgrading apparatus is connected to the display apparatus, the Internet service or application function may be performed by the display apparatus or the upgrading apparatus.

In an exemplary embodiment, the display apparatus may execute a first application program, and process and display a first image signal that has been generated as a result of the execution of the first application program. The connected upgrading apparatus may execute a second application program and process a second image signal that has been generated as a result of the execution of the second application, and transmit the second image signal to the display apparatus. The display apparatus may receive and display the second image signal together with the first image signal.

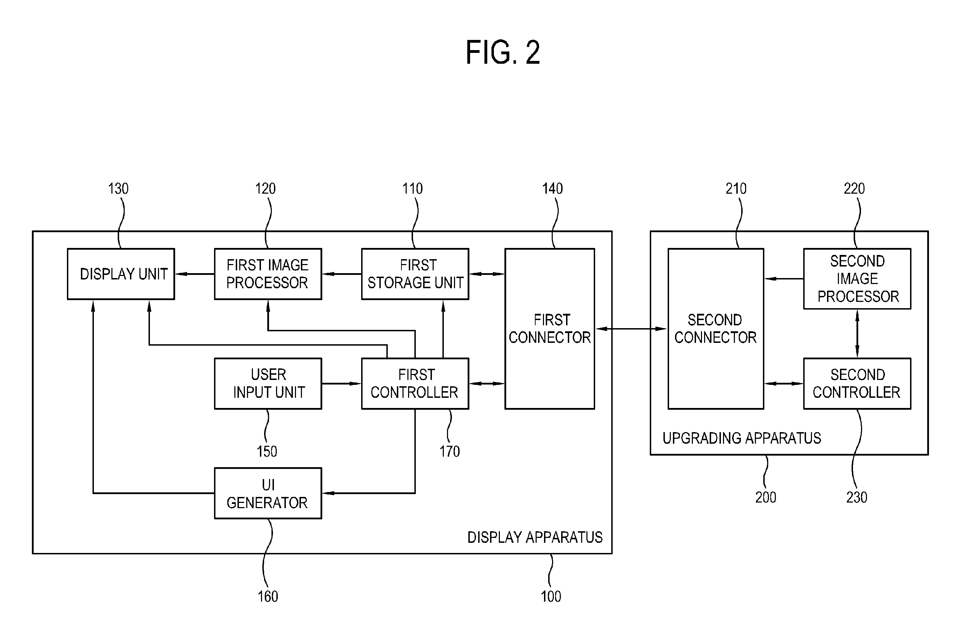

Hereinafter, an exemplary embodiment will be described in more detail with reference to FIGS. 2 to 8.

FIG. 2 is a control block diagram of a display apparatus 100 and an upgrading apparatus 200 according to an exemplary embodiment.

As shown therein, the display apparatus 100 includes a first storage unit 110 (e.g., a storage, etc.), a first image processor 120, a display unit 130 (e.g., a display, etc.), a first connector 140, a user input unit 150 (e.g., a user input), a user interface (UI) generator 160 and a first controller 170 which controls the foregoing elements of the display apparatus. The upgrading apparatus 200 includes a second connector 210, a second image processor 220 and a second controller 230 which controls the foregoing elements of the upgrading apparatus.

The first storage unit 110 stores therein a plurality of programs performing a predetermined function. For example, the first storage unit 110 stores therein an operating system (OS), a web browser, an open-ended software platform, and a plurality of applications which is selected and downloaded by a user through the open-ended software platform. The first storage unit 110 stores therein various programs and version information of the programs. The first storage unit 110 may be implemented as a non-volatile memory such as a flash memory and a hard disc drive. The first storage unit 110 is accessed by the first controller 170, and data stored therein are read/written/modified/deleted/updated by the first controller 170. The first storage unit 110 may store therein data which are performed by the first controller 170. If the upgrading apparatus 200 is connected to the display apparatus 100 through the first connector 140 (to be described later), the first storage unit 110 may be accessed by the upgrading apparatus 200, and data may be read/written/modified/deleted/updated by the second controller 230 of the upgrading apparatus 200.

If the first program of the first storage unit 110 is executed by the first controller 170, the first image processor 120 processes a first image signal corresponding to the execution of the first program to display the processed first image signal on the display unit 130. For example, the first image processor 120 may perform at least one of various image processing operations including a de-multiplexing operation for diving signals by nature, a decoding operation corresponding to an image format of an image signal, a de-interlacing operation for converting an interlaced image signal into a progressive image signal, a scaling operation for adjusting an image signal into a preset resolution, a noise reduction operation for improving image quality, a detail enhancement operation, and a frame refresh rate conversion.

The first image processor 120 may combine a second image signal transmitted by the first connector 140 and the first image signal, by the first controller 170 and output the combined image signal to the display unit 130. The combination process may be performed by a screen combination method as selected by a user of screen combination methods (to be described later). The screen combination method may include picture-in-picture (PIP), picture-on-picture (POP) and picture-by-picture (PBP). The first image processor may further include a voice signal processor (not shown) which processes a voice signal other than the foregoing image processing, and the display apparatus 100 may further include a speaker (not shown) which outputs a voice corresponding to the voice signal processed by the voice signal processor.

The display unit 130 may display the first image signal thereon corresponding to the execution of the first program output by the image processor. The display unit 130 may display the second image signal corresponding to the execution of the second program from the upgrading apparatus 200, together with the first image signal. The first and second image signals may be displayed on the display unit 130 by one of PIP, POP and PBP.

The display unit 130 may include a display panel (not shown) and a panel driver (not shown) to drive the display panel. For example, the display panel may be implemented as various displays such as liquid crystal, plasma, light-emitting diode (LED), organic light-emitting diode (OLED), surface-conduction electron-emitter, carbon nano-tube, and nano-crystal.

The first connector 140 may be implemented as an interface to which the upgrading apparatus 200 is connected. The first connector 140 may include an interface to transmit and receive various data signals, image signals, control signals and power between the display apparatus 100 and the upgrading apparatus 200. For example, the first connector 140 may include a connection terminal corresponding to high definition multimedia interface (HDMI) or component standard to transmit and receive image signals, and a USB terminal to transmit and receive data signals/control signals/power. All signals which are transmitted by the display apparatus 100 to the upgrading apparatus 200 may be encoded for security of contents. The encoded signal may be processed after being decoded by the upgrading apparatus 200.

The user input unit 150 may transmit preset various control commands or unlimited information to the first controller 170 by a user's manipulation and input. The user input unit 150 is implemented as a menu key and an input panel installed in an external part of the display apparatus 100 or as a remote controller separated/spaced from the display apparatus 100. The user input unit 150 may be integrally formed in the display unit 130. That is, if the display unit 130 includes a touch screen, a user may transmit a preset command to the first controller 170 through an input menu (not shown) displayed on the display unit 130. According to another aspect of an exemplary embodiment, a user's selection that is input through the user input unit 150 may be transmitted to the upgrading apparatus 200 through a connector.

The UI generator 160 may generate and display on the display unit 130 a menu screen displaying an option for a screen combination method of the first and second image signals by a control of the first controller 170. The menu screen may include an option for selecting at least one of PIP, POP and PBP.

The first controller 170 executes at least one program stored in the first storage unit 110. The first controller 170 executes the first program corresponding to a first user's selection input through the user input unit 150, and controls the first image processor 120 to process the first image signal corresponding to the execution of the first program and displays the processed first image signal on the display unit 130. The first controller 170 may transmit and receive signals/information/data through the first connector 140 and perform a control operation in response to a command from the user input unit 150.

The first controller 170 identifies whether a user's selection input through the user input unit 150 requests for an execution of one or more predetermined program by multiple users (i.e., multi-users). If the user's selection requests for the execution of the predetermined program by the multiple users and the upgrading apparatus 200 is connected to the first connector 140, the first controller 170 transmits to the upgrading apparatus 200 data necessary for the execution of the second program stored in the first storage unit 110. The data which is necessary for the execution of the program include programs stored in the first storage unit 110 and version information of the programs. The first controller 170 also transmits an execution command of the second program to the upgrading apparatus 200. Upon receiving the data necessary for the execution of the second program and the execution command, the upgrading apparatus 200 executes the second program, processes the second image signal corresponding to the execution of the second program and transmits the processed second image signal to the display apparatus 100 to display the second image signal on the display unit 130. Upon receiving the second image signal from the upgrading apparatus 100, the first controller 170 controls the first image processor 120 to combine the first and second image signals by a screen combination method according to the user's selection, and displays the combined signal on the display unit 130. In this case, the first controller 170 serves as a master controller, and the second controller 230 of the upgrading apparatus 200 connected to the display apparatus 100 serves as a slave controller. Accordingly, the first controller 170 may transmit necessary data and command to the second controller 230 upon receiving a user's selection for requesting for the execution of the one or more predetermined programs by multiple users.

According to another aspect of an exemplary embodiment, the upgrading apparatus 200 may access the first storage unit 110 of the display apparatus 100. If the user's input through the user input unit 150 requests for the execution by the multiple users, the first controller 170 transmits the user's selection to the upgrading apparatus 200. According to the user's selection, the first controller 170 executes the first program in the first storage unit 110. Upon receiving the user's selection, the upgrading apparatus 200 accesses the first storage unit 110 according to the user's selection, reads and executes the second program and processes the second image signal corresponding to the execution of the second program and transmits the processed second image signal to the display apparatus 100. Upon receiving the second image signal from the upgrading apparatus 200, the first controller 170 controls the first image processor 120 to combine the first and second image signals by a screen combination method according to the user's selection, and displays the combined signal on the display unit 130.

The upgrading apparatus 200 includes a second connector 210, a second image processor 220 and a second controller 230.

The second connector 210 is connected to the first connector 140 for communication between the upgrading apparatus 200 and the display apparatus 100. The second connector 210 is in accordance with the standard corresponding to the first connector 140 to be connected to the first connector 140. Accordingly, the second connector 210 may include an interface to transmit and receive various data signals, image signals and power between the upgrading apparatus 200 and the display apparatus 100. For example, the second connector 210 may include a connection terminal corresponding to high definition multimedia interface (HDMI) or component standard to transmit and receive image signals, and a USB terminal to transmit and receive data signals/control signals/power.

The second image processor 220 may process the second image signal corresponding to the execution of the second program by a control of the second controller 230 to display the processed second image signal on the display unit 130 of the display apparatus 100. The second image processor 220 may perform functions which are identical or similar to those of the first image processor 120 of the display apparatus 100. The second image processor 220 may perform an upgraded image processing operation compared to the image processing operation of the first image processor 120.

If the upgrading apparatus 200 is connected to the display apparatus 100 through the second connector 210 and the display apparatus 100 transmits data necessary for the execution of the second program and/or an execution command, the second controller 230 executes the second program and controls the second signal processor to process the second image signal corresponding to the execution of the second program to display the processed second image signal on the display unit 130. The second controller 230 controls the second connector 210 to transmit the processed second image signal to the display apparatus 100.

As another example, the upgrading apparatus 200 may access the first storage unit 110 of the display apparatus 100. Upon receiving a user's selection for requesting for the execution by multiple users from the display apparatus 100, the upgrading apparatus 200 accesses the first storage unit 110, reads and executes the second program, and controls the second image processor 220 to process the second image signal corresponding to the execution of the second program. The second controller 230 controls the second connector 210 to transmit the second image signal processed by the second image processor 220, to the display apparatus 100.

The upgrading apparatus 200 may further include a storage unit (not shown), and the storage unit may store therein data transmitted by the display apparatus 100 or program execution results by the second controller 230. In an exemplary embodiment, the first program executed by the display apparatus 100 may be identical to the second program executed by the upgrading apparatus 200.

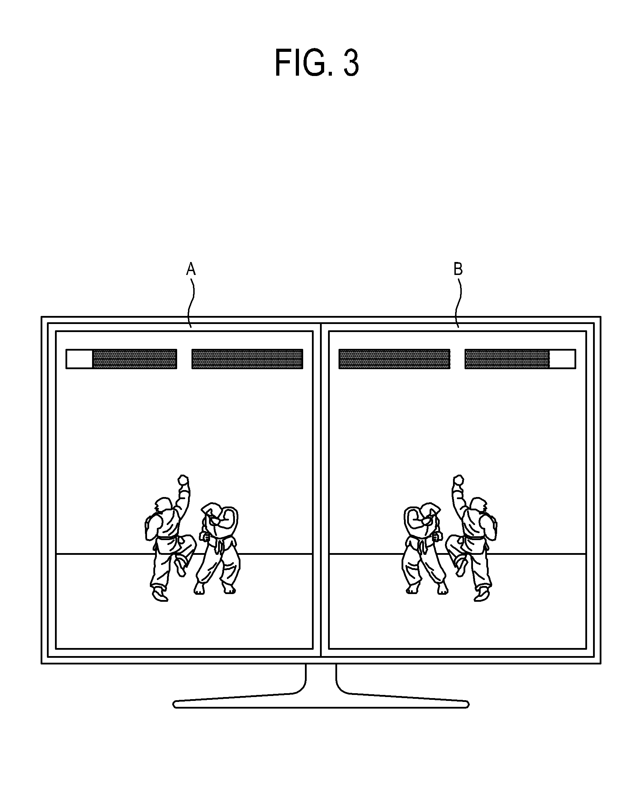

FIG. 3 illustrates a display apparatus 100 which displays a plurality of images according to an exemplary embodiment. The first storage unit 110 stores therein an application corresponding to a game 1 which may be executed by multiple users. If an execution command for the application of the game 1 is input through the user input unit 150 and a command for selecting the execution of the application of the game 1 by multiple users is input, the first controller 170 transmits to the upgrading apparatus 200 the data necessary for the execution of the application of the game 1 stored in the first storage unit 110 and the execution command of the application. The first controller 170 executes the application of the game 1, and controls the first image processor 120 to process the first image signal corresponding to the execution and displays the processed first image signal on the display unit 130. Upon receiving the data necessary for the execution of the application of the game 1 and the execution command of the application from the display apparatus 100, the second controller 230 of the upgrading apparatus 200 executes the application of the game 1 based on the data and controls the second image processor 220 to process the second image signal corresponding to the execution and to display the processed second image signal on the display unit 130. The second controller 230 controls the second connector 210 to transmit the processed second image signal to the display apparatus 100. Upon receiving the second image signal from the upgrading apparatus 200, the first controller 170 of the display apparatus 100 controls the first image processor 120 to combine the first and second image signals. The second controller 230 controls the UI generator 160 to generate a menu screen for displaying an option for the combination method of the two image signals, and upon receiving a user's selection regarding the option through the user input unit 150, combines the first and second image signals by the screen combination method selected by a user and displays the combined image signal on the display unit 130. If a user's selection of PBP is input as in FIG. 3, the first image processor 120 combines the first image signal (A in FIG. 3) and the second image signal (B in FIG. 3) by PBP and displays the combined image signal on the display unit 130. As the display apparatus 100 and the upgrading apparatus 200 are connected to each other through the first and second connectors 140 and 210 for communication, if the identical game 1 application is executed by the display apparatus 100 and the upgrading apparatus 200, respectively, they may exchange data according to the execution. Accordingly, a user may control a single device (display apparatus 100) and execute the game 1 application in a multi-player mode and display the execution results concurrently on the display unit 130. That is, a user may enjoy the game as if he/she uses two electronic devices connected through a network and have more convenience. In an exemplary embodiment, the program includes a game application, but may include any application which may be executed by multiple users.

According to another aspect of an exemplary embodiment, the first program executed by the display apparatus 100 and the second program executed by the upgrading apparatus 200 may be different from each other. The first storage unit 110 may store a game application and an SNS application, and receive a first user's selection requesting for an execution of the game application and a second user's selection requesting for an execution of the SNS application through the user input unit 150. The first and second user's selections may be input sequentially. The first controller 170 executes the game application of the first storage unit 110 according to the first user's selection and displays on the display unit 130 the first image signal corresponding to the execution of the game application. The first controller 170 transmits to the upgrading apparatus 200 the data necessary for the execution of the SNS application and the execution command for the second user's selection. The upgrading apparatus 200 executes the SNS application based on the received data and under the execution command, processes the second image signal corresponding to the execution to display the processed second image signal on the display unit 130, and transmits the processed second image signal to the display apparatus 100. The first controller 170 of the display apparatus 100 displays the second image signal together with the first image signal on the display unit 130. The combination process is the same as that explained above, and will not be repeated.

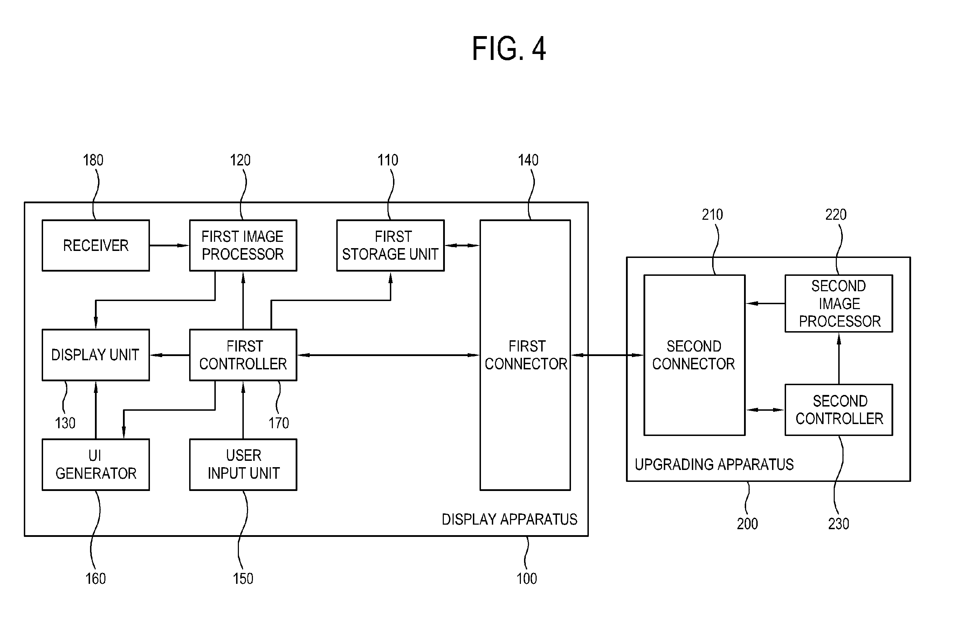

FIG. 4 is a control block diagram of the display apparatus 100 and the upgrading apparatus 200 as another type of the exemplary embodiment.

Referring to FIG. 4, the display apparatus 100 includes a receiver 180, a first image processor 120, a display unit 130, a first storage unit 110, a first connector 140, a user input unit 150, a UI generator 160 and a first controller 170 which controls the foregoing elements. The upgrading apparatus 200 includes a second connector 210, a second image processor 220 and a second controller 230 which controls the foregoing elements. The display apparatus 100 in FIG. 4 has elements performing almost identical or similar functions to those of the display apparatus 100 in FIG. 2 except for the receiver 180. Thus, repetitive description will be omitted. The elements of the upgrading apparatus 200 in FIG. 4 perform almost identical or similar functions to those of the upgrading apparatus 200 in FIG. 2, and repetitive description will be omitted.

The receiver 180 may transmit an image signal from an external image source (not shown) to the first image processor 120, and the receiver 180 may receive a broadcasting signal from a transmission apparatus (not shown) of a broadcasting station. For example, the receiver 180 may include an antenna (not shown) and/or a tuner (not shown) to receive the broadcasting signal. The receiver 180 may receive an image signal from an external image source (not shown). The receiver 180 varies by a standard of the received image signal and an embodiment type of an image source (not shown) and the display apparatus 100. For example, the receiver 180 may receive signals/data according to standards such as high definition multimedia interface (HDMI), USB and component, and include a plurality of connection terminals (not shown) corresponding to the foregoing standards and/or according to wireless communication standards and interfaces.

The first image processor 120 processes the broadcasting signal received by the receiver 180 and outputs the processed broadcasting signal to the display unit 130. The processing of the broadcasting signal is identical/similar to the processing by the first image processor 120 of the display apparatus 100 in FIG. 2. Thus, repetitive description will be omitted.

If a user's selection is input by the user input unit 150 to request for the execution of a program of the first storage unit 110 while the broadcasting signal processed by the first image processor 120 is displayed on the display unit 130, the first controller 170 transmits the data necessary for the execution of the requested program and the execution command to the upgrading apparatus 200 connected to the first connector 140. The second controller 230 of the upgrading apparatus 200 executes the program based on the data and command, and controls the second image processor 220 to process the image signal corresponding to the execution of the program to display the processed image signal on the display unit 130 of the display apparatus 100. The second controller 230 controls the second connector 210 to transmit the processed image signal to the display apparatus 100. The first controller 170 of the display apparatus 100 controls the first image processor 120 and the display unit 130 to display the received image signal together with the broadcasting signal. The first controller 170 controls the UI generator 160 to generate and display on the display unit 130 a menu screen including an option for a screen combination method for the image signal and the broadcasting signal, and controls the first image processor 120 to combine the image signal and the broadcasting signal corresponding to one of the options input through the user input unit 150. The first controller 170 according to an exemplary embodiment is a master controller and the second controller 230 of the upgrading apparatus 200 connected to the display apparatus 100 is a slave controller. Thus, the first controller 170 may transmit necessary data and command to the second controller 230 upon receiving a user's selection requesting for the execution of a predetermined program by multiple users.

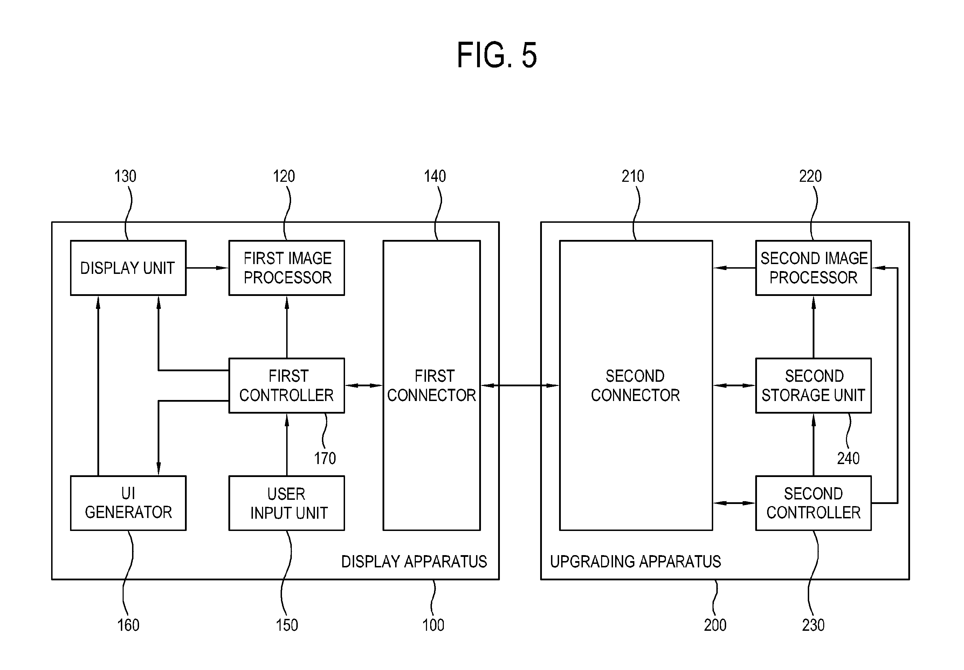

FIG. 5 is a control block diagram of a display apparatus 100 and an upgrading apparatus 200 according to another type of the exemplary embodiment.

Referring to FIG. 5, the display apparatus 100 includes a first image processor 120, a display unit 130, a first connector 140, a user input unit 150, a UI generator 160 and a first controller 170 which controls the foregoing elements. The upgrading apparatus 200 includes a second connector 210, a second image processor 220, a second storage unit 240 and a second controller 230 which controls the foregoing elements.

Elements of the display apparatus 100 in FIG. 5 perform almost identical/similar functions to those of the display apparatus 100 in FIG. 2 or 4. Thus, repetitive description will be omitted. Elements of the upgrading apparatus 200 in FIG. 5 perform almost identical/similar functions to those of the upgrading apparatus 200 in FIG. 2 or 4 except for the second storage unit 240. Thus, repetitive description will be omitted.

The difference of the elements in FIG. 5 from those in FIGS. 2 and 4 is that the storage unit storing therein a plurality of programs performing predetermined functions is provided in the upgrading apparatus 200. The second storage unit 240 includes a plurality of programs which perform predetermined functions. Like the first storage unit 110 in FIG. 2, the second storage unit 240 stores therein, an OS, a web browser, an open-ended software platform, and a plurality of applications which is selected and downloaded by a user through the open-ended software platform. The second storage unit 240 stores therein the foregoing programs and version information of the programs. The second storage unit 240 may be implemented as a non-volatile memory such as a flash memory or a hard disc drive. The second storage unit 240 is accessed by the second controller 230, and the data stored in the second storage unit 240 is read/written/modified/deleted/updated by the second controller 230. The second storage unit 240 may store therein data read/written/modified/deleted/updated by the second controller 230.

If a user selection requesting for the execution of a particular program is input through the user input unit 150 of the display apparatus 100 and a user's selection requesting for the execution of the requested program by multiple users is input, the first controller 170 transmits the input user's selection to the upgrading apparatus 200. Upon receiving the user's selection, the second controller 230 of the upgrading apparatus 200 transmits to the display apparatus 100 the data necessary for the execution of the program stored in the second storage unit 240 corresponding to the user's selection and the execution command. The first controller 170 of the display apparatus 100 executes the program based on the received data and execution command, and controls the first image processor 120 to process the first image signal according to the execution of the program to display the processed first image signal on the display unit 130.

The second controller 230 executes the program by accessing the second storage unit 240, controls the second image processor 220 to process the second image signal corresponding to the execution, and controls the second connector 210 to transmit the processed second image signal to the display apparatus 100.

The first controller 170 of the display apparatus 100 controls the first image processor 120 to display the second image signal together with the fist image signal on the display unit 130. The combination process of the two image signals is the same as the process explained in FIG. 2, and repetitive description will be omitted.

The second controller 230 of the upgrading apparatus 200 connected to the display apparatus 100 according to another aspect of an exemplary embodiment may serve as a master controller and the first controller 170 of the display apparatus 100 may serve as a slave controller. Accordingly, the second controller 230 may transmit necessary data and command to the first controller 170 upon receiving the user's selection requesting for the execution of the predetermined program by multiple users.

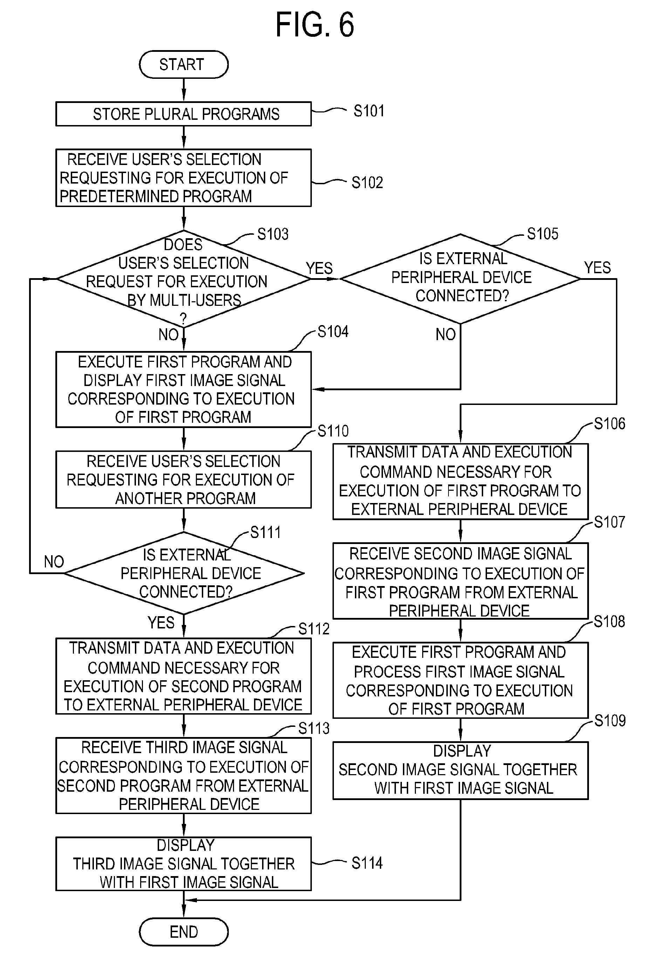

FIG. 6 is a control flowchart of the display apparatus 100 in FIG. 2.

Referring to FIG. 6, a plurality of programs performing predetermined functions is stored in the first storage unit 110 of the display apparatus 100 (S101). If a user's selection is transmitted to request for the execution of one of the stored programs through the user input unit 150 (S102), the first controller 170 identifies whether the user's selection requests for the execution by multiple users (S103). If it is identified that the user's selection does not request for the execution by multiple users (S103-NO), the first controller 170 executes the first program corresponding to the user's selection, controls the first image processor 120 to process the first image signal corresponding to the execution of the first program, and displays the processed first image signal on the display unit 130 (S104).

If it is identified at operation S103 that the user's selection requests for the execution by multiple users (S103-YES), the first controller 170 identifies whether the upgrading apparatus 200 is connected to the first connector 140 (S105). If it is identified at operation S105 that the upgrading apparatus 200 is connected to the first connector 140 (S105-YES), the first controller 170 transmits data necessary for the execution of the first program and the execution command to the upgrading apparatus 200 (S106). The upgrading apparatus 200 executes the first program based on the received data and execution command, and transmits the second image signal to the display apparatus 100 corresponding to the execution (S107). The first controller 170 executes the first program by accessing the first storage unit 110 (S108), and controls the first image processor 120 to display the first image signal corresponding to the execution, together with the second image signal transmitted by the upgrading apparatus 200, on the display unit 130 (S109). If it is identified at operation S105 that the upgrading apparatus 200 is not connected to the first connector 140 (S105-NO), the operation S104 is performed.

If a user's selection requesting for an execution of another program is received after the operation S104 (S110), the first controller 170 identifies whether the upgrading apparatus 200 is connected (S111). If it is identified that the upgrading apparatus 200 is connected (S111-YES), the first controller 170 transmits to the upgrading apparatus 200 the data necessary for the execution of the second program corresponding to the user's selection and the execution command (S112). The upgrading apparatus 200 executes the second program based on the received data and execution command, and transmits a third image signal to the display apparatus 100 corresponding to the execution (S113). The first controller 170 controls the first image processor 120 to combine and process the first and second image signals and displays the combined image signal on the display unit 130 (S114).

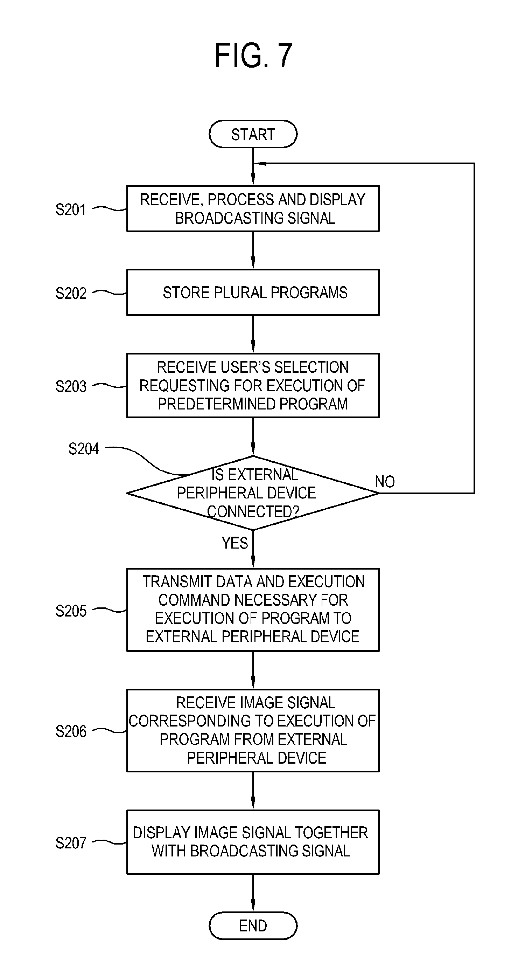

FIG. 7 is a control flowchart of the display apparatus 100 in FIG. 4.

Referring to FIG. 7, if the display apparatus 100 receives a broadcasting signal through the receiver 180, the first controller 170 controls the first image processor 120 to process the received broadcasting signal and displays the processed broadcasting signal on the display unit 130 (S201). The first storage unit 110 stores therein a plurality of programs performing predetermined functions (S202). If a user's selection requesting for the execution of the predetermined program is received through the user input unit 150 (S203), the first controller 170 identifies whether the upgrading apparatus 200 is connected thereto (S204). If it is identified that the upgrading apparatus 200 is connected to the display apparatus 100 (S204-YES), the first controller 170 transmits to the upgrading apparatus 200 the data necessary for the execution of the program corresponding to the user's selection and the execution command (S205). The upgrading apparatus 200 executes the program based on the data and command, and processes the image signal corresponding to the execution and transmits the processed image signal to the display apparatus 100 (S206). Upon receiving the image signal from the upgrading apparatus 200, the first controller 170 displays the image signal together with the broadcasting signal on the display unit 130 (S207).

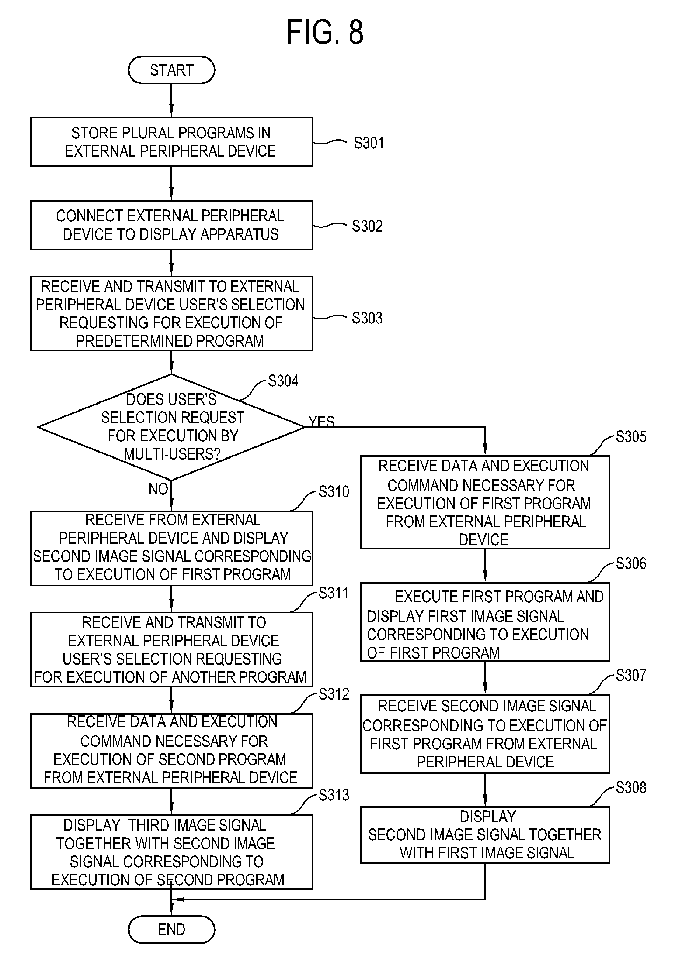

FIG. 8 is a control flowchart of the display apparatus 100 in FIG. 5.

Referring to FIG. 8, a plurality of programs performing predetermined functions is stored in the second storage unit 240 of the upgrading apparatus 200 (S301). If the upgrading apparatus 200 is connected to the display apparatus 100 (S302) and a user's selection is transmitted to request for the execution of the predetermined program through the user input unit 150, the first controller 170 of the display apparatus 100 transmits the user's selection to the upgrading apparatus 200 (S303). The second controller 230 of the upgrading apparatus 200 identifies whether the user's selection requests for the execution by multiple users (S304). If it is identified that the user's selection requests for the execution by multiple users (S304-YES), the upgrading apparatus 200 transmits to the display apparatus 100 the data necessary for the execution of the first program corresponding to the user's selection and the execution command (S305). The display apparatus 100 executes the first program based on the received data and command, and displays the first image signal corresponding to the execution (S306). The upgrading apparatus 200 executes the first program, and transmits the second image signal corresponding to the execution to the display apparatus 100 (S307). The display apparatus 100 combines and processes the first image signal and the received second image signal to display the combined and processed image signal on the display unit 130 (S308).

If it is identified at operation S304 that the user's selection does not request for the execution by multiple users, the upgrading apparatus 200 transmits the second image signal corresponding to the execution of the first program according to the user's selection, to the display apparatus 100 and the display apparatus 100 displays the second image signal on the display unit 130 (S310).

If a user's selection is subsequently transmitted through the user input unit 150 to request for the execution of another program, the display apparatus 100 transmits the selection to the upgrading apparatus 200 (S311). The upgrading apparatus 200 transmits to the display apparatus 100 data necessary for the execution of the second program and the execution command (S312), and the display apparatus 100 processes the second image signal corresponding to the execution of the second program based on the data and command to display the processed second image signal on the display unit 130. The display apparatus 100 combines and processes the second and third image signals and displays the combined and processed image signal on the display unit 130 (S313).

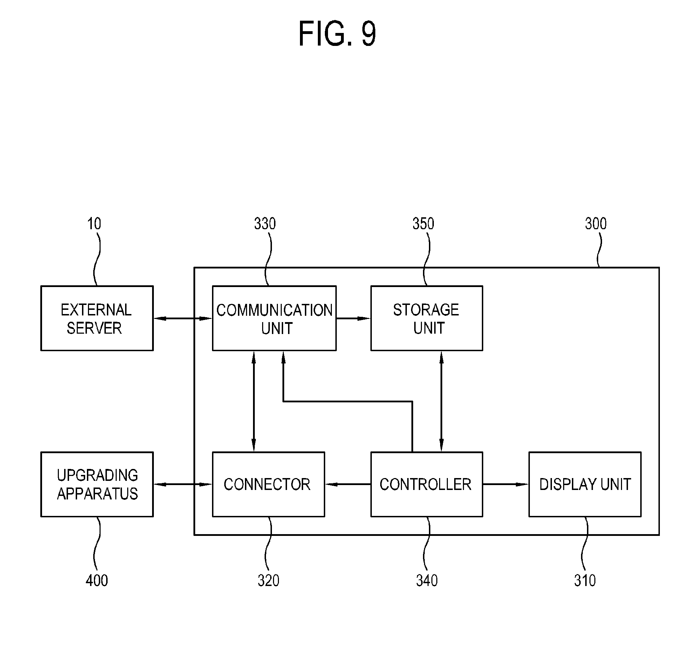

Hereinafter, an exemplary embodiment will be described with reference to FIGS. 9 to 11.

The display apparatus according to the exemplary embodiment may be connected to the upgrading apparatus to use functions of the upgrading apparatus, and a connection method of the upgrading apparatus may be as in FIG. 1.

FIG. 9 is a control block diagram of a display apparatus 300 according to an exemplary embodiment.

As shown therein, the display apparatus 300 includes a display unit 310, a connector 320, a communication unit 330 (e.g., a communicator, etc.) and a controller 340.

The display unit 310 displays an image thereon. The display unit 310 may be implemented as a plasma display panel (PDP), a liquid crystal display (LCD), an organic light emitting diode (OLED), a flexible display, etc.

The connector 320 is connected to the upgrading apparatus 400 which is provided to upgrade the display apparatus 300. The connector 320 may be implemented as a connector according to standards such as a high definition multimedia interface (HDMI), a universal serial bus (USB), a component, etc. The upgrading apparatus 400 and the display apparatus 300 may exchange various signals through the connector 320, and the display apparatus 300 may supply power to the upgrading apparatus 400 through the connector 320.

The communication unit 330 communicates with an external server 10 through known wired/wireless communication methods, and receives various application programs from the external server 10. The display apparatus 300 should have an inherent ID to be authorized to receive the application program from the external server 10. If the display apparatus 300 transmits the inherent ID to the external server 10 to receive the application program, the external server 10 determines whether the display apparatus 300 is authorized to receive the application program based on the inherent ID. The upgrading apparatus 400 may also receive and execute the application program. Even if the upgrading apparatus 400 does not have a communication function, the upgrading apparatus 400 may be connected to the external server 10 through the communication unit 330 of the display apparatus 300 and receive the application program by being mounted in the display apparatus 300.

The external server 10 stores therein the application program data and the information regarding the device which is authorized to receive the application program. The external server 10 identifies purchase history of the application program and compatibility of devices based on the inherent ID.

The controller 340 may control elements of the display apparatus 300, execute application programs and may be implemented as a central processing unit (CPU).

The controller 340 identifies connection/non-connection of the upgrading apparatus 400 through the connector 320, and upon receiving a request for an application program from the connected upgrading apparatus 400, requests for the application program to the external server 10. As explained above, the display apparatus 300 should undergo the authorization process through its inherent ID to be authorized as a device to receive the application program. Upon receiving a request for an application program from the upgrading apparatus 400, one of inherent IDs of the display apparatus 300 and the upgrading apparatus 400 is transmitted to the external server 10 through the communication unit 330 to request for authorization.

Hereinafter, the inherent ID which is stored in the display apparatus 300 and used to identify the display apparatus 300 will be named as a first inherent ID, and the inherent ID which is stored in the upgrading apparatus 400 and used to identify the upgrading apparatus 400 will be named as a second inherent ID. The controller 340 identifies whether the upgrading apparatus 400 stores the second inherent ID therein. According to the identification result, the authorization process of the external server 10 is performed in separately. Hereinafter, exemplary embodiments regarding storage/non-storage of the second inherent ID will be described.

First, the case where the upgrading apparatus 400 stores the second inherent ID therein will be described.

If the upgrading apparatus 400 stores the second inherent ID therein, the controller 340 of the display apparatus 300 transmits the second inherent ID to the external server 10 through the communication unit 330. The external server 10 receives the second inherent ID, identifies whether the upgrading apparatus 400 is authorized to receive the application program and transmits the application program to the display apparatus 300. The display apparatus 300 transmits the application program to the upgrading apparatus 400 through the communication unit 300, and the application program is stored in a memory of the upgrading apparatus 400.

The right to control the application program which has been received by the display apparatus 300 through the authorization process based on the second inherent ID is retained by the upgrading apparatus 400. That is, the application may be executed only by the upgrading apparatus 400 in principle. After the application program is stored, if the upgrading apparatus 400 is connected to another display apparatus 300 other than the display apparatus 300 which has received the application program, the application program may be executed by the upgrading apparatus 400. Even in this case, the controller 340 of the display apparatus 300 may be granted the control right by the upgrading apparatus 400 and execute the application program stored in the upgrading apparatus 400.

Hereinafter, the case where the upgrading apparatus 400 does not store the second inherent ID therein will be described.

The display apparatus 300 may further include a storage unit 350 to store a first inherent ID therein to identify the display apparatus 300. The storage unit 350 may be provided as a large storage device such as a hard disc drive (HDD), and may store various information including application programs therein. Upon receiving a request for an application program from the upgrading apparatus 400, if it is determined that the upgrading apparatus 400 does not store the second inherent ID therein, the controller 340 transmits the stored first inherent ID to the external server 10 through the communication unit 330 and requests for authorization for the reception of the application program. In this case, the application program is stored in the upgrading apparatus 400 which has requested the application program.

The right to control the application program which has been received based on the first inherent ID is retained by the controller 340. Accordingly, the upgrading apparatus 400 may be granted the control right by the controller 340 to execute the application program. If the upgrading apparatus 400 is connected to another display apparatus 300 other than the display apparatus 300 which has received the application program, the upgrading apparatus 400 may not execute the stored application program.

In the display apparatus 300 which has been described above, the application program which has been transmitted by the external server 10 through the communication function of the display apparatus 300 may be used through the upgrading apparatus 400.

The controller 340 may execute the application program stored in the storage unit 350 regardless of the upgrading apparatus 400. The first image which has been generated by executing the application program by the display apparatus 300 is formed as a separate layer from the second image which has been generated by executing the application program by the upgrading apparatus 400. The controller 340 may combine the first and second images based on a preset priority and display the combined image on the display unit 310.

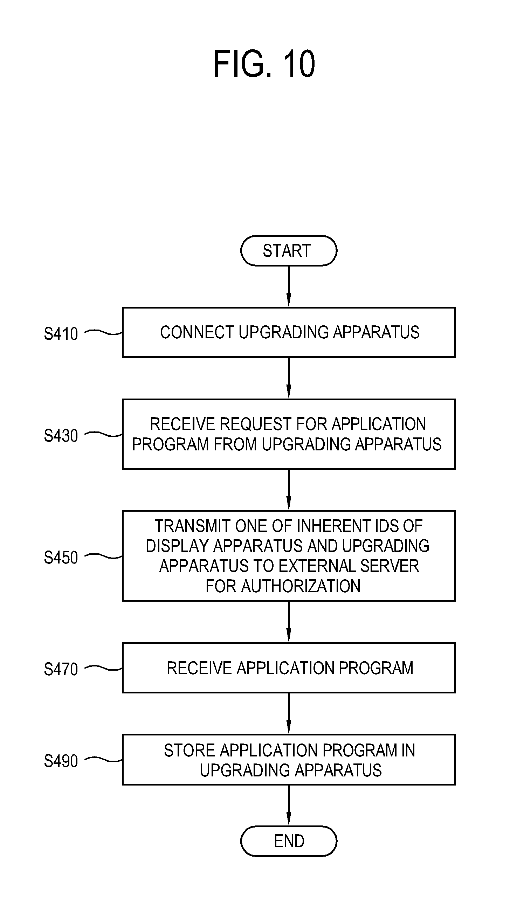

FIG. 10 is a control flowchart of a display apparatus 300 according to an exemplary embodiment.

The upgrading apparatus 400 is connected to the display apparatus 300 (S410). The display apparatus 300 may be implemented as a TV, and the upgrading apparatus 400 is provided to upgrade existing hardware/software configurations of the display apparatus 300. The upgrading apparatus 400 may include a memory to store application programs therein and a CPU to execute the application programs.

The display apparatus 300 receives a request for an application program from the upgrading apparatus 400 (S430). The display apparatus 300 may communicate with the external server 10 through known wired/wireless communication methods, and receive various application programs from the external server 10. The upgrading apparatus 400 may receive the application program from the external server 10 by using the communication function of the display apparatus 300. In this case, the inherent ID should be transmitted and authorized by the external server 10 to receive the application program from the external server 10. The external server 10 determines whether the display apparatus 300 is entitled to receive the application program based on the inherent ID.

The display apparatus 300 transmits one of inherent IDs of the display apparatus 300 and the upgrading apparatus 400 and requests for authorization for receiving the application program (S450). If the display apparatus 300 is determined to be entitled to receive the application program, the external server 10 transmits the application program to the display apparatus 300 (S470), and the transmitted application program is stored in the upgrading apparatus 400 (S490).

The display apparatus 300 may execute the stored application program regardless of the upgrading apparatus 400. The first image which has been generated by executing the application program by the display apparatus 300 is formed as a separate layer from the second image which has been generated by executing the application program by the upgrading apparatus 400. The display apparatus 300 may combine and display the first and second images based on a preset priority.

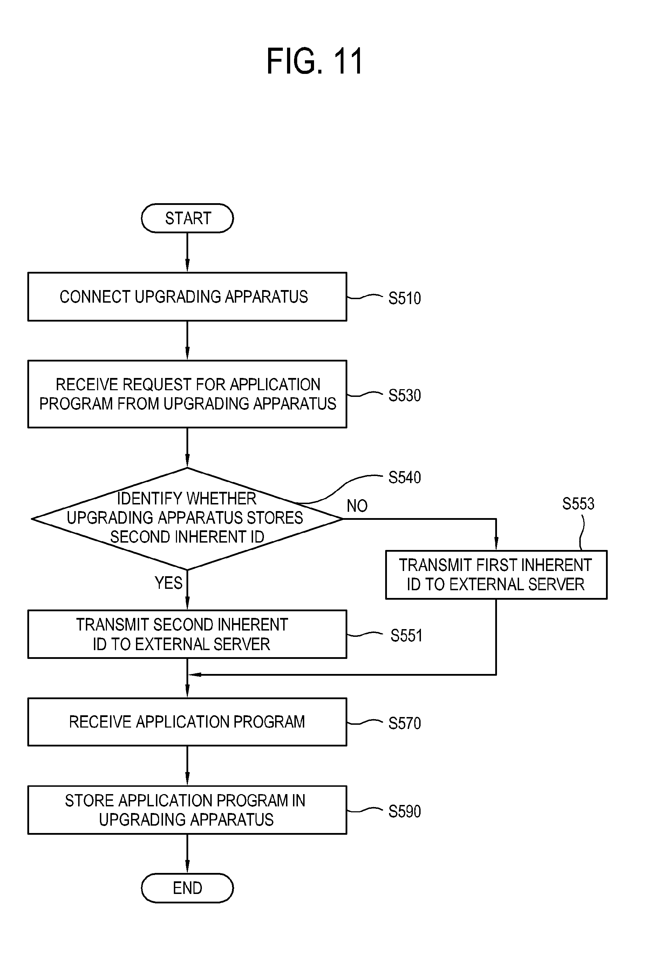

FIG. 11 illustrates a part of the control flowchart in FIG. 10.

First, it is determined that the upgrading apparatus is connected to the display apparatus (S510). Upon receiving a request for an application program from the upgrading apparatus 400 (S530), the display apparatus 300 identifies whether the upgrading apparatus 400 stores therein the second inherent ID (S540). The request for authorization of the external server 10 depending on the storage/non-storage of the second inherent ID is performed separately.

If the upgrading apparatus 400 stores the second inherent ID therein (S540-YES), the display apparatus 300 transmits the second inherent ID to the external server 10 (S551). In this case, the right to control the application program which has been received through the authorization process based on the second inherent ID is retained by the upgrading apparatus 400 (S570). That is, the application program may be executed only by the upgrading apparatus 400 in principle, and after the application program is stored (S590), the application program may be executed by the upgrading apparatus 400 even if the upgrading apparatus 400 is connected to another display apparatus 400 other than the display apparatus 300 which has received the application program. Even in this case, the display apparatus 300 may be granted the control right by the upgrading apparatus 400 and execute the application program stored in the upgrading apparatus 400.

If the upgrading apparatus 400 does not store the second inherent ID therein (S540-NO), the display apparatus 300 transmits the first inherent ID to the external server 10 to identify the display apparatus 300 (S553). In this case, the control right to the application program which has been received through the authorization process based on the first inherent ID is retained by the display apparatus 300. Accordingly, the upgrading apparatus 400 may be granted the control right by the display apparatus 300 to execute the application program. If the upgrading apparatus 400 is connected to another display apparatus 300 other than the display apparatus 300 which has received the application program, the upgrading apparatus 400 may not execute the stored application program.

According to the control method of the display apparatus 300 which has been described above, the application program which has been transmitted by the external server 10 through the communication function of the display apparatus 300 may be used through the upgrading apparatus 400.

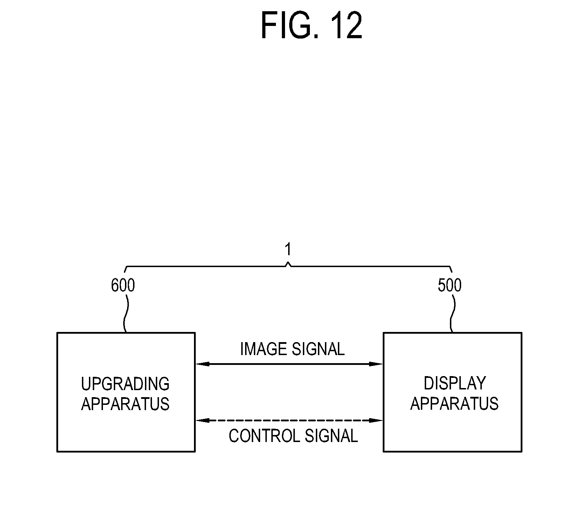

Hereinafter, an exemplary embodiment will be described with reference to FIGS. 12 to 19.

FIG. 12 is a block diagram of a display system 1 according to an exemplary embodiment.

As shown therein, the display system 1 according to an exemplary embodiment includes a display apparatus 500 and an upgrading apparatus 600. The display apparatus 500 and the upgrading apparatus 600 are connected to each other for communication. The upgrading apparatus 600 is connected to the display apparatus 500, i.e., an existing device (hereinafter, to be also called original device) and acts as an extended device. The connected display apparatus 500 and upgrading apparatus 600 exchange image signals such as broadcasting signals and control signals including various data and power. The display apparatus 500 processes an image signal supplied by an external image supply source (not shown), and displays the processed image signal.

In the display system 1 according to an exemplary embodiment, the display apparatus 500 is implemented as a TV which displays a broadcasting image based on broadcasting signals/broadcasting information/broadcasting data transmitted by a transmission apparatus of a broadcasting station. However, an exemplary embodiment is not limited to the foregoing implementation type of the display apparatus 500. The display apparatus 500 may include various types of displays which display an image.

The type of an image which is displayable by the display apparatus 500 is not limited to the broadcasting image, and may include a video, still image, applications, on screen display (OSD), a graphic user interface (GUI) to control various operations, based on signals/data transmitted by various signal supply sources (not shown).

The upgrading apparatus 600 is connected to the display apparatus 500 for communication. The upgrading apparatus 600 upgrades existing hardware/software configurations of the connected display apparatus 500, and enables the upgraded hardware/software configurations of the display apparatus 500 to process an image signal to thereby display an image with improved quality.

For example, the upgrading apparatus 600 may be a device for upgrading hardware of a TV such as an image processing circuit, and may be detachably attached to the display apparatus 500.

The upgrading apparatus 600 may also be connected to the display apparatus 500 in a wireless manner. In this case, the upgrading apparatus 600 may receive power from an additional external power source or battery. In an exemplary embodiment, however, the case where the upgrading apparatus 600 is connected to the display apparatus 500 in a wired manner will be described.

The display apparatus 500 may process an image signal supplied from the outside, and display an image based on the processed image signal.

According to an exemplary embodiment, the upgrading apparatus 600 is connected to the display apparatus 500 and upgrades hardware/software configurations of the display system 1 performing the image processing operation. The upgrading apparatus 600 receives from the display apparatus 500 and processes the image signal, and transmits the processed image signal to the display apparatus 500. The display apparatus 500 displays an image corresponding to the image signal transmitted by the upgrading apparatus 600. Accordingly, an image with improved quality may be provided.

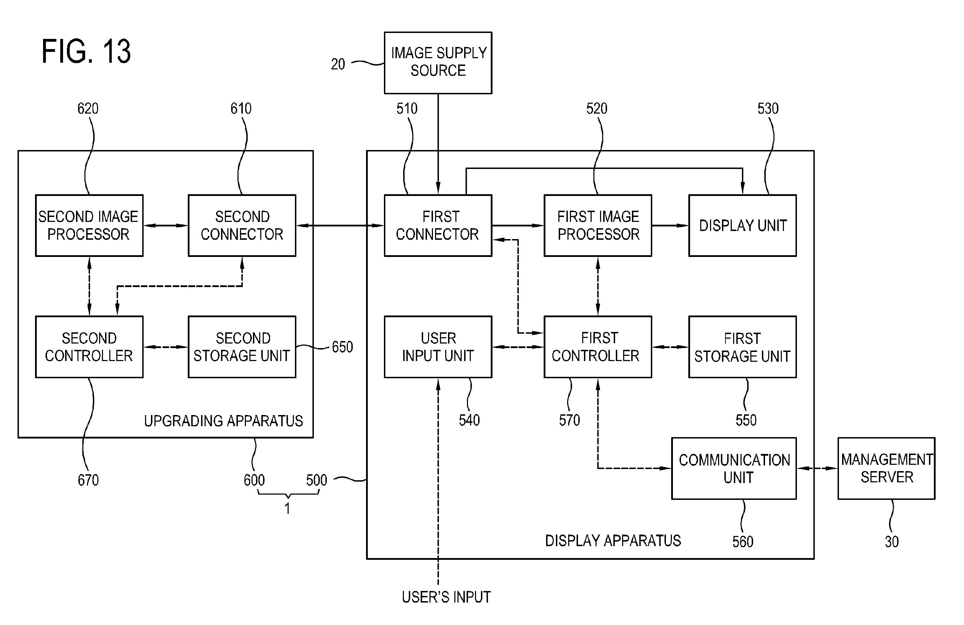

FIG. 13 is a block diagram of a display apparatus 500 and an upgrading apparatus 600 which form a display system 1 according to an exemplary embodiment.

As shown therein, the display apparatus 500 includes a first connector 510 which is connected to at least one image supply source 20, a first image processor 520 which processes an image signal transmitted by the image supply source 20 through the first connector 510, a display unit 530 which displays an image thereon based on the image signal processed by the first image processor 520, a user input unit 540 which outputs a preset command according to a user's input, a first storage unit 550 which stores therein unlimited data/information, a communication unit 560 which communicates with the outside in a wired/wireless manner, and a first controller 570 which controls overall operations of the display apparatus 500.

The first connector 510 is an input/output (I/O) device transmitting an image signal from at least one image supply source 20 to the first image processor 520, and varies by a standard of a received image signal or an implementation type of the image supply source 20 and the display apparatus 500. For example, the first connector 510 receives signals/data according to standards such as HDMI, USB, and component and includes a plurality of connection terminals (not shown) corresponding to the foregoing standards. Various external devices including the image supply source 20 are connected to the connection terminals to enable communication via the first connector 510.

That is, the external device which is connected to the first connector 510 is not limited to the image supply source 20. Any device which may exchange signals/data with the display apparatus 500 through the first connector 510 may be connected to the first connector 510, and according to an exemplary embodiment, the upgrading apparatus 600 may be connected to the first connector 510.

The first image processor 520 processes an image signal transmitted by the first connector 510 according to preset various image processing operations. The first image processor 520 outputs the processed image signal to the display unit 530 to display an image on the display unit 530 based on the image signal.

The image processing operation of the first image processor 520 may include, but not limited to, a de-multiplexing operation for dividing a predetermined signal by nature, a decoding operation corresponding to an image format of an image signal, a de-interlacing operation for converting an interlaced image signal into a progressive image signal, a scaling operation for adjusting an image signal into a preset resolution, a noise reduction operation for improving an image quality, a detail enhancement operation, and a frame refresh rate conversion.

The first image processor 520 is implemented as an image processing board (not shown) which is formed by mounting various chipsets (not shown), memories (not shown), electronic parts (not shown), wirings (not shown), etc. on a printed circuit board (PCB) (not shown) to perform the foregoing image processing operations.

The display unit 530 displays an image thereon based on an image signal output by the first image processor 520. The display unit 530 may be implemented as various display panels including liquid crystal, plasma, light-emitting diode (LED), organic light-emitting diode (OLED), surface-conduction electron-emitter, carbon nano-tube, and nano-crystal, but not limited thereto.

The display unit 530 may further include additional elements depending on the display type. For example, the display unit 530 as an LCD type may include an LCD panel (not shown), a backlight unit (not shown) to emit light to the LCD panel, and a panel driving substrate (not shown) to drive the LCD panel (not shown).

The user input unit 540 outputs preset various control commands or unlimited information by a user's manipulation and input to the first controller 570. The user input unit 540 may be implemented as a menu key and an input panel installed in an external part of the display apparatus 500, or a remote controller which is separated/spaced from the display apparatus 500.

The user input unit 540 may be integrally formed in the display unit 530. That is, if the display unit 530 includes a touch screen, a user may transmit a preset command to the first controller 570 through an input menu (not shown) displayed on the display unit 530.

The first storage unit 550 stores therein unlimited data by a control of the first controller 570. The first storage unit 550 is implemented as a non-volatile memory such as a flash memory or a hard disc drive. The first storage unit 550 is accessed by the first controller 570, and data stored therein may be read/recorded/modified/deleted/updated by the first controller 570.

The data which are stored in the first storage unit 550 include an operating system (OS) for driving the display apparatus 500, various applications which are executed on the OS, image data, and additional data.

The communication unit 560 communicates with the outside, e.g., a management server 30. The communication unit 560 includes a wired/wireless communication module to communicate with the outside including the management server 30.

The first controller 570 controls various elements of the display apparatus 500. For example, the first controller 570 controls the first image processor 520 to process an image signal, executes an application for graphic processing such as GUI, receives and transmits signals/information/data through the first connector 510, and performs a corresponding control operation with respect to a command from the user input unit 540 to thereby control overall operations of the display apparatus 500.

The display apparatus 500 having the foregoing configuration should be upgraded due to various factors such as the development of technology as usage time elapses. For example, the display apparatus 500 should be upgraded to receive an image signal in a new format that was not offered at the time of manufacturing the display apparatus 500 or to receive an image signal with a resolution that is higher than the level supported by the display apparatus 500 to meet the trend requiring a high quality image, or to reduce system load to the display apparatus 500.

Upgrading the display apparatus 500 may be considered from the perspectives of hardware and software. According to an exemplary embodiment, the upgrading apparatus 600 is connected to the first connector 510 to upgrade at least one of existing hardware and software of the display apparatus 500.

The upgrading apparatus 600 includes hardware/software configurations corresponding to at least a part of hardware/software resources of the display apparatus 500. The configurations of the upgrading apparatus 600 may perform an improved function compared to the part of the resources of the display apparatus 500. Upon connection to the display apparatus 500, the upgrading apparatus 600 replaces at least a part of the existing resources of the display apparatus 500 to improve the quality of an image displayed by the display apparatus 500.

According to an exemplary embodiment, upon connection to the display apparatus 500, the upgrading apparatus 600 (extended device) obtains the right to control the image processing operation of the display apparatus 500 (original device). Then, the upgrading apparatus 600 (extended device) replaces resources of the display apparatus 500 (original device), and the existing resources of the display apparatus 500, e.g., the first image processor 520 exists as a spare resource.

The existing resources of the display apparatus 500 which have transferred the control right to the image processing operation exist in a standby mode, and the display unit 530 receives the image signal processed by the upgrading apparatus 600 and displays an image corresponding to the received image signal.

Hereinafter, configurations of the upgrading apparatus 600 will be described.

The upgrading apparatus 600 includes a second connector 610 which is connected to the first connector 510 of the display apparatus 500, a second image processor 620 which performs processes corresponding to at least a part of the image processing operations of the first image processor 520, a second storage unit 650 which stores unlimited data/information therein, and a second controller 670 which controls overall operations of the upgrading apparatus 600.

The second connector 610 is connected to the first connector 510 and enables communication between the upgrading apparatus 600 and the display apparatus 500. The second connector 610 may be connected to at least one of a plurality of connection terminals (not shown) of the first connector 510.

For example, out of the plurality of connection terminals of the first connector 510, the second connector 610 may be connected to an HDMI terminal (not shown) to transmit and receive image signals between the display apparatus 500 and the upgrading apparatus 600, and to a USB terminal (not shown) to transmit and receive data and power between the display apparatus 500 and the upgrading apparatus 600. However, this is an example, and the connection method for the first and second connectors 510 and 610 may vary.

The second image processor 620 may perform a second process corresponding to a first process performed by the first image processor 520 of the display apparatus 500. The first and second processes are named for purposes of convenience only, and may include a single unit process or a plurality of unit processes. The second process is functionally improved compared to the first process, and such improvement is realized by improvement of hardware such as chipsets or improvement of software such as algorithms/execution codes/programs.

The second image processor 620 performs the second process on behalf of the first process by a control of the first controller 570 or the second controller 670 when the display apparatus 500 and the upgrading apparatus 600 are connected to each other. As the second process which is functionally improved compared to the first process replaces the first process, the entire image processing operation may be improved. This will be described in more detail later.

The second storage unit 650 stores therein unlimited data. The second storage unit 650 may be implemented as a non-volatile memory such as a flash memory or a hard disc drive. The second storage unit 650 is accessed by the first controller 570 or the second controller 670, and the data stored in the second storage unit 650 is read/written/modified/deleted/updated by the first controller 570 or the second controller 650. The first storage unit 550 may be accessed by the second controller 670 as well as by the first controller 570 depending on its implementation type.

The second controller 670 controls various elements of the upgrading apparatus 600 to perform the overall image processing operation. For example, the second controller 670 controls the second image processor 620 to perform the image processing operations, transmits and receives signals/information/data through the second connector 610 to thereby control entire operations of the upgrading apparatus 600.

The second controller 670 and the first controller 570 may be implemented as a CPU. If the second controller 670 may perform an improved function compared to the first controller 570, the second controller 670 may disable the first controller 570 and control overall operations of the display system 1 on behalf of the first controller 570. Otherwise, the second controller 670 may control the overall operations of the display system 1 together with the first controller 570.

The second controller 670 and the first controller 570 may further include a memory such as a graphic processing unit (GPU), a digital signal processor (DSP), and a DDR RAM.

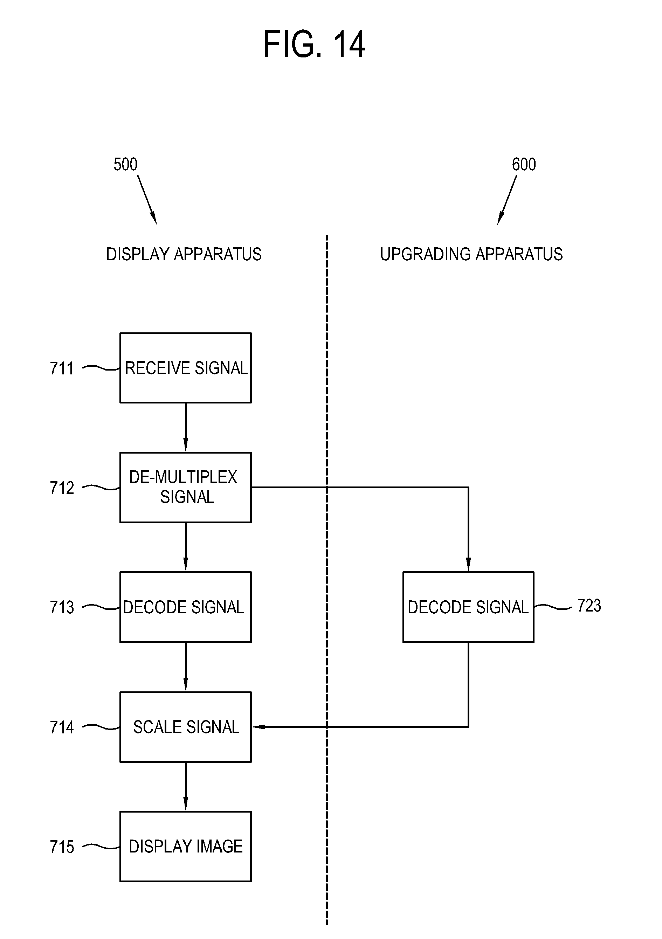

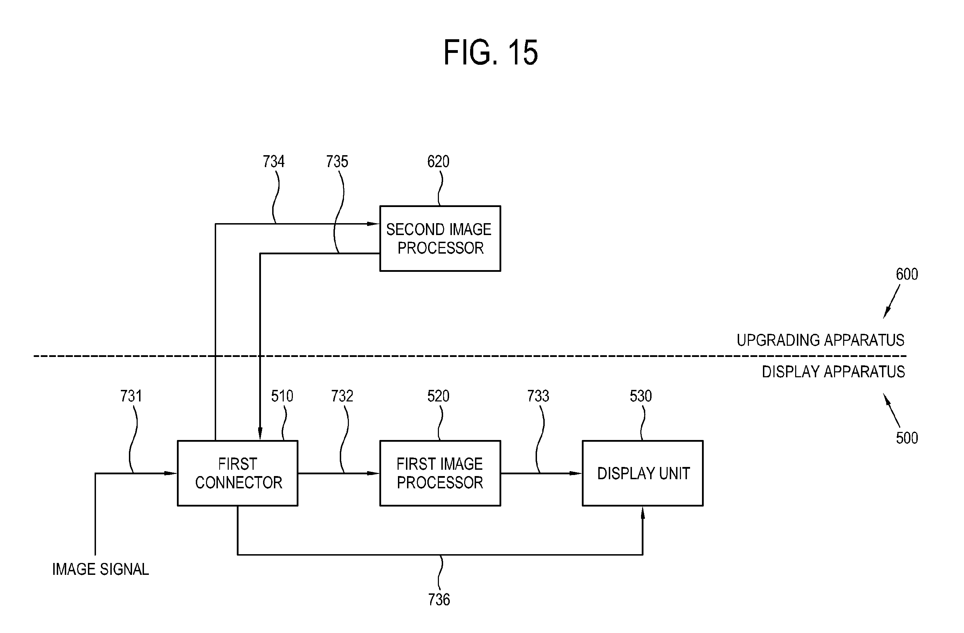

Hereinafter, an exemplary embodiment for upgrading the display apparatus 500 by the upgrading apparatus 600 will be described with reference to FIGS. 14 and 15. As shown in FIGS. 14 and 15, the upgrading apparatus 600 which is mounted in the display apparatus 500 operates as a main device and the display apparatus 500 operates as a spare device.

FIG. 14 is a flowchart showing a method of upgrading the image processing operation of the display apparatus 500 by the upgrading apparatus 600 in the display system 1 according to an exemplary embodiment.

As shown therein, upon receiving a predetermined signal, e.g., a broadcasting signal from the image supply source 20 (711), the display apparatus 500 processes the broadcasting signal according to image processing operations 712, 713 and 714 in a preset sequence. The image processing operations 712, 713 and 714 in FIG. 14 only represent some of the image processing operations, but not all of image processing operations of the display apparatus 500.

The display apparatus 500 performs a de-multiplexing operation for dividing the received broadcasting signal into an image signal, a voice signal and additional data (712). The display apparatus 500 processes the de-multiplexed signal, e.g., decodes the image signal into a preset image format (713). The display apparatus 500 scales the decoded image signal into a predetermined resolution to display an image on the display unit 530 (714), and displays the image based on the scaled image signal (715).

In a series of sequences, the upgrading apparatus 600 may perform a process 723 corresponding to the decoding process 713 of the display apparatus 500. The decoding process 723 of the upgrading apparatus 600 is identical in an operational aspect to the decoding process 713 of the display apparatus 500 but functionally improved from the decoding operation 713 of the display apparatus 500. Thus, performance of the decoding process 723 may improve the image processing operation.

For example, the decoding operation 723 may process an image signal with a resolution that is not processed by the decoding operation 713, or may process an image signal in a format that is not processed by the decoding operation 723 or apply an additional effect to the image signal that is not applied by the decoding operation 713.

Regarding the sequence of the image processing operation according to an exemplary embodiment, the decoding operation 723 of the upgrading apparatus 600 replaces the decoding operation 713 of the display apparatus 500 after the performance of the de-multiplexing operation 712, by a control of the first controller 570 or the second controller 670. The scaling operation 714 follows the decoding operation 723 of the upgrading apparatus 600.

In such a sequence, the display apparatus 500 and the upgrading apparatus 600 exchange image signals and control signals, according to a control of the first controller 570 or the second controller 670.

Unlike the case in FIG. 14 in which a part of the image processing operation is replaced, the second image processor 620 of the upgrading apparatus 600 may replace the first image processor 520 of the display apparatus 500. This will be described with reference to FIG. 15. FIG. 15 is a block diagram showing a process of transmitting an image signal received through the first connector 510 in the display system 1 according to an exemplary embodiment.

Referring to FIG. 15, if the upgrading apparatus 600 is not connected to the display apparatus 500, if the image signal is received through the first connector 510 (731), the image signal is transmitted to the first image processor 520 (732). The first image processor 520 processes the image signal and outputs the processed image signal to the display unit 530 (733), and the display unit 530 displays an image thereon based on the image signal processed by the first image processor 520.

As shown in FIG. 15, if the upgrading apparatus 600 is connected to the display apparatus 500, the image signal is received through the first connector 510 (731), and then transmitted to the second image processor 620 not the first image processor 520 (734). The second image processor 620 processes the first image signal on behalf of the first image processor 520, and the image signal processed by the second image processor 620 is transmitted back to the display apparatus 500 (735).

The image signal bypasses the first image processor 520 and is transmitted to the display unit 530 (736), and the display unit 530 displays an image based on the image signal processed by the second image processor 620.

If the display apparatus 500 and the upgrading apparatus 600 are connected to each other, the second controller 670 may disable the first controller 570 and control the first and second image processors 520 and 620. If an OS stored in the second storage unit 650 is a version-up of an OS stored in the first storage unit 550, the OS of the first storage unit 550 is updated to the OS of the second storage unit 650 to be driven, or the OS of the second storage unit 540 may be driven on behalf of the OS of the first storage unit 550.

With the foregoing configuration, the upgrading apparatus 600 according to an exemplary embodiment may upgrade the display apparatus 500.

If the display apparatus 500 and the upgrading apparatus 600 are connected to each other, the first controller 570 of the display apparatus 500 monitors the state of the upgrading apparatus 600 (main device) through the first connector 510.

More specifically, the first controller 570 controls the first connector 510 to periodically receive a predetermined signal from the upgrading apparatus 600 to monitor the state of the upgrading apparatus 600.

To do so, the second controller 670 of the upgrading apparatus 600 additionally transmits a predetermined signal to the display apparatus 500 to show the normal operation of the upgrading apparatus 600. The upgrading apparatus 600 according to an exemplary embodiment may periodically transmit a heat bit signal to the display apparatus 500 through the second connector 610.

As the case may be, the second controller 670 of the upgrading apparatus 600 may control the second connector 610 to transmit to the display apparatus 500 a heat bit signal as a response signal to the predetermined signal transmitted periodically by the display apparatus 500. That is, the first controller 570 of the display apparatus 500 controls the first connector 510 to periodically transmit a predetermined signal to the upgrading apparatus 600, and to receive the heat bit signal as the response signal from the upgrading apparatus 600.

The first controller 570 monitors the heat bit signal that is transmitted periodically by the upgrading apparatus 600. If it is monitored that the heat bit signal has not been received, the first controller 570 determines that there is an error in the upgrading apparatus 600.

If it is determined that the error has occurred from the upgrading apparatus 600, the control right to the image processing operation is transferred to the display apparatus 500. The original device which exists as the spare resource performs the image processing operation by the connection of the upgrading apparatus 600. The first controller 570 performs a preparation operation for performing the image processing operation by the display apparatus 500.

The first controller 570 executes at least one application to perform the function of the upgrading apparatus 600 as well as the image processing operation. The at least one application includes an application providing various services (e.g., graphic processing such as GUI) of a smart TV.

More specifically, if the first controller 570 detects an occurrence of an error from the upgrading apparatus 600 (extended device or main device), the first controller 570 controls the first image processor 520 of the display apparatus 500 (original device or spare device) to process the image signal transmitted by the image supply source 20 rather than transmitting the image signal to the upgrading apparatus 600. The first controller 570 controls the display unit 530 to display an image thereon based on the image signal processed by the first image processor 520.

Accordingly, even upon occurrence of the error from the upgrading apparatus 600 (original device), the image signal may be normally processed and displayed by the display apparatus 500 (spare device) without suspension. Further, not only the image processing operation but also all of functions of the upgrading apparatus 600 including the execution of various applications of a smart TV are performed by the display apparatus 500. That is, any convenience due to suspension of services may be prevented.

The first controller 570 controls the display unit 530 to display thereon an interfaces 51 and 52 (hereinafter, to be also called GUI or UI) regarding the error of the upgrading apparatus 600.

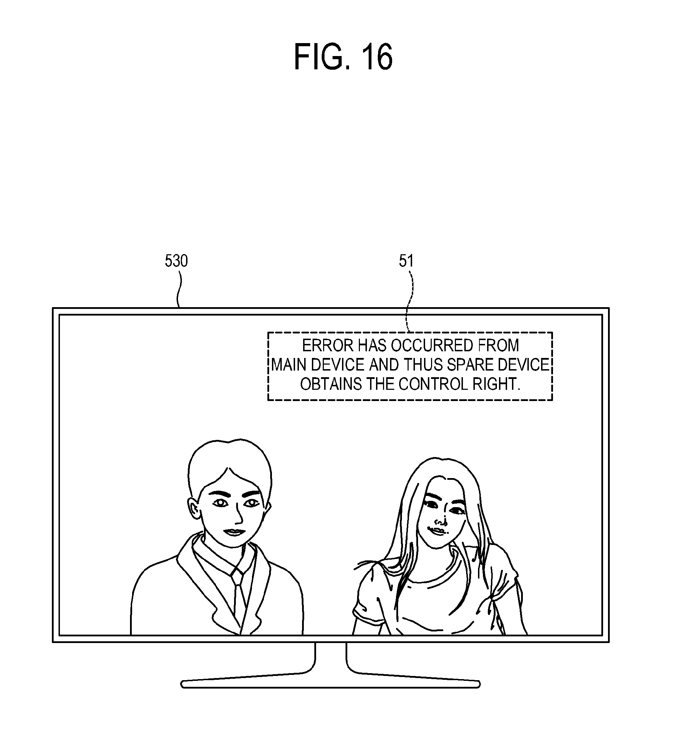

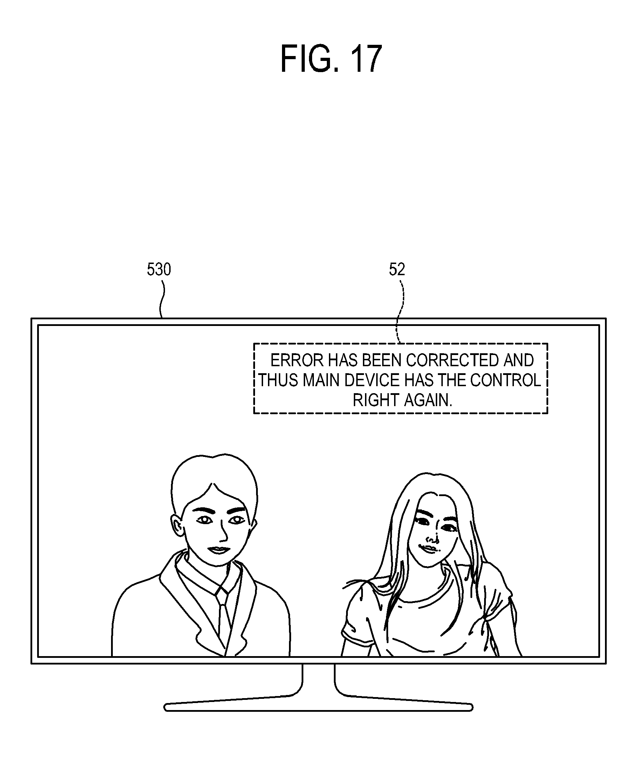

FIGS. 16 and 17 illustrate a screen displayed on the display unit 530.

As shown in FIG. 16, if an error of the upgrading apparatus 600 (main device) is detected, the first controller 570 displays on the display unit 530 a UI 51 showing that the control right to the image processing process and other functions is transferred to the display apparatus 500 (spare device). Thus, a user may view images without suspension and recognize the occurrence of the error from the upgrading apparatus 600.

If the occurrence of the error from the upgrading apparatus 600 is detected, the first controller 570 controls the communication unit 560 to notify the management server 30 of the foregoing. A manager may easily manage the display system 1 through such notification.

The second controller 670 restores the error of the upgrading apparatus 600. The first controller 570 may restore the error by resetting or rebooting the upgrading apparatus 600.

If the error of the upgrading apparatus 600 is restored by the reset or rebooting, the second controller 670 controls the second connector 610 to periodically transmit the suspended heat bit signal to the display apparatus 500. The heat bit signal may be a response signal to a predetermined signal that is periodically transmitted by the display apparatus 500 to the upgrading apparatus 600.

If it is detected that the heat bit signal is transmitted by the upgrading apparatus 600 through the first connector 510, the first controller 570 determines that the error of the upgrading apparatus 600 has been restored. The control right of the display apparatus 500 is transferred to the upgrading apparatus 600.

Accordingly, the first controller 570 controls the first connector 510 to transmit the image signal from the image supply source 20 to the upgrading apparatus 600, and to receive the processed image signal from the upgrading apparatus 600, and controls the display unit 530 to display an image thereon based on the received image signal.

The second controller 670 of the upgrading apparatus 600 receives the image signal from the display apparatus 500 through the second connector 610, and controls the second image processor 620 to process the image signal. The processed image signal is transmitted to the display apparatus 500 through the second connector 610. The first image processor 520 of the display apparatus 500 becomes a spare resource again. The second controller 670 executes at least one application including the graphic processing such as GUI and transmits the processed signal to the display apparatus 500 through the second connector 610. The second controller 670 controls the second connector 610 to periodically transmit a heat bit signal to the display apparatus 500.

As shown in FIG. 17, the first controller 570 controls the display unit 530 to display a UI 52 showing that the error of the upgrading apparatus 600 has been restored and the control right has been transferred to the upgrading apparatus 600 (main device). Then, a user may recognize that the error of the upgrading apparatus 600 has been restored and the upgrading apparatus 600 normally operates.

If the error of the upgrading apparatus 600 is not restored by the reset or rebooting, the first controller 570 may control the display unit 530 to display a UI showing that the error has not been restored and A/S is requested, while the control right is retained by the display apparatus 500. The first controller 570 may receive the remote examination of the upgrading apparatus 600 through the communication unit 560 of the management server 30 and restore the error.

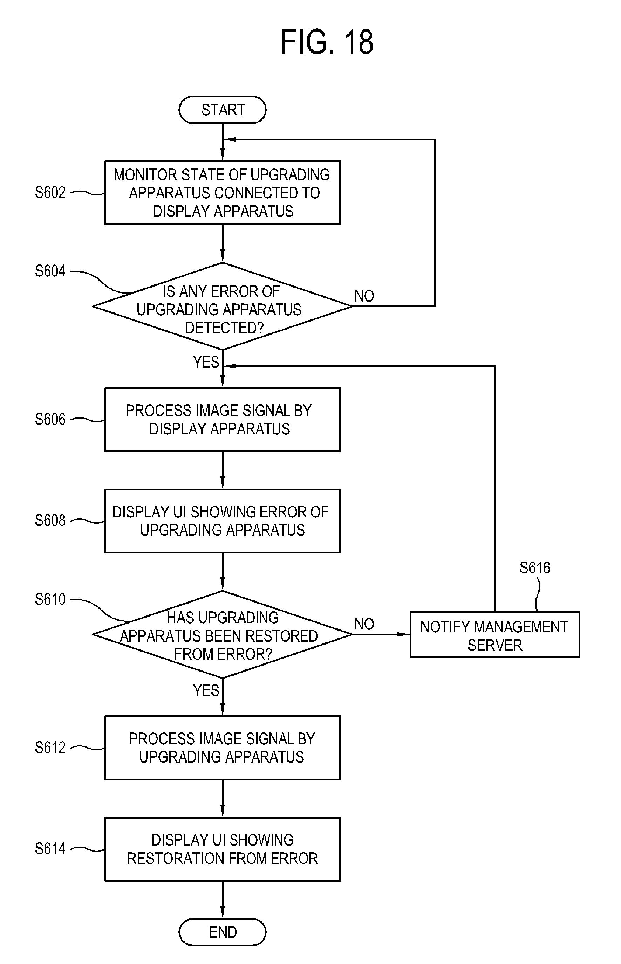

FIG. 18 is a flowchart showing a control method of a display apparatus 500 according to an exemplary embodiment.

As shown therein, the first controller 570 of the display apparatus 500 monitors the state of the upgrading apparatus 600 connected to the first connector 510 of the display apparatus 500 to upgrade hardware/software (S602). The first controller 570 may monitor the state of the upgrading apparatus 600 based on the heat bit signal periodically transmitted by the upgrading apparatus 600.

The first controller 570 determines whether there is any error in the upgrading apparatus 600 based on the monitoring at operation S602 (S604). If the heat bit signal is not transmitted by the upgrading apparatus 600, the first controller 570 may determine that the error has occurred from the upgrading apparatus 600.

If the error has been detected from the upgrading apparatus 600 at operation (S604-YES), the first controller 570 transfers the control right to the display apparatus 500, and controls the first image processor 520 to process the image signal supplied by the image supply source 20 (S606). The first controller 570 further executes at least one application to perform the function of the upgrading apparatus 600. The display unit 530 displays an image thereon based on the image signal processed by the first image processor 520 and the signal processed by various applications. If the error has not been detected from the upgrading apparatus 600 at operation (S604-NO), the first controller 570 may continue monitoring the state of the upgrading apparatus 600 based on the heat bit signal periodically transmitted by the upgrading apparatus 600.

The first controller 570 controls the display unit 530 to display thereon a UI 51 regarding the error of the upgrading apparatus 600 (S608).

The first controller 570 continues to monitor the state of the upgrading apparatus 600 and determines whether the upgrading apparatus 600 has been restored from the error (S610). If the heat bit signal which was suspended at operation S604 is periodically transmitted again, the first controller 570 may determine that the upgrading apparatus 600 has been restored from the error.

If it is determined at operation at S610 that the upgrading apparatus 600 has been restored from the error (S610-YES), the first controller 570 transfers the control right to the upgrading apparatus 600, and the upgrading apparatus 600 processes the image signal and executes various applications (S612). The first controller 570 controls the first connector 510 to transmit the image signal from the image supply source 20 to the upgrading apparatus 600, and to receive the image signal processed by the upgrading apparatus 600. The display unit 530 displays an image thereon based on the received image signal.

The first controller 570 controls the display unit 530 to display thereon a UI 52 showing the restoration of the upgrading apparatus 600 from the error (S614).

If it is determined at operation S610 that the upgrading apparatus 600 has not been restored from the error (S610-NO), the first controller 570 may control the communication unit 560 to notify the management server 30 of the foregoing (S616). If the error is not restored even after the time required for restoring the error by the reset or rebooting elapses, the first controller 570 may notify the management server 30 of the foregoing.

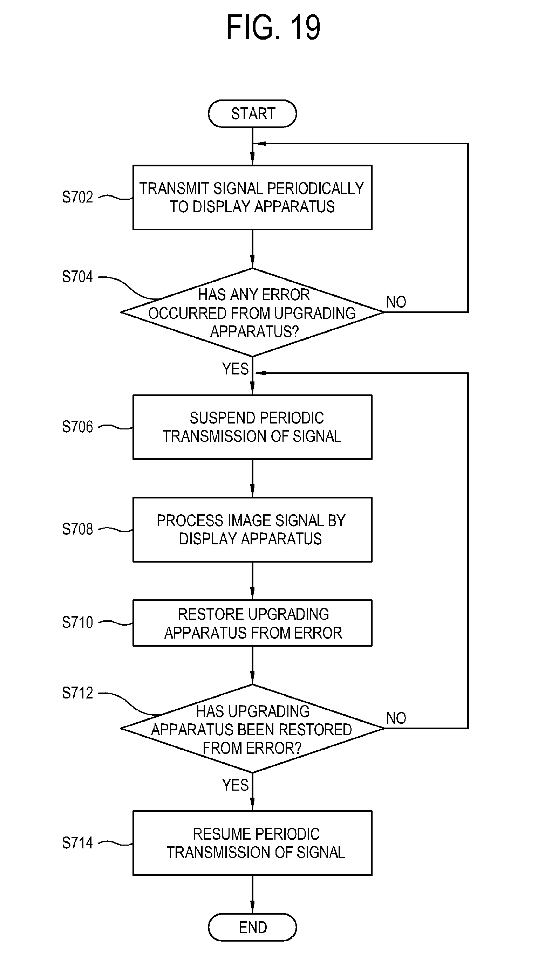

FIG. 19 is a flowchart showing a control method of the upgrading apparatus 600 according to an exemplary embodiment.

As shown therein, the upgrading apparatus 600 is connected to the first connector 510 of the display apparatus 500 to upgrade hardware/software, and periodically transmits a predetermined signal, i.e., a heat bit signal to the display apparatus 500 (S702). The upgrading apparatus 600 may transmit to the display apparatus 500 a heat bit signal as a response signal to a predetermined signal that is periodically transmitted by the display apparatus 500.

The second controller 670 determines whether any error has occurred from the upgrading apparatus 600 (S704). If it is determined that the error has not occurred at operation (S704-NO), the upgrading apparatus continues periodically transmitting a predetermined signal.

If it is determined that the error has occurred at operation (S704-YES), the periodic transmission of the heat bit signal is suspended (S706).

If it is determined that the error has occurred at operation S704, the control right to the image processing operation is transferred to the display apparatus 500, and the display apparatus 500 receives, processes and displays the image signal (S708). The second controller 670 may control the second connector 610 to transmit a command for processing the image signal by the display apparatus 500.

The second controller 670 restores the error of the upgrading apparatus 600 (S710). The second controller 670 may restore the error by resetting or rebooting the upgrading apparatus 600.

The second controller 670 determines whether the upgrading apparatus 600 has been restored from the error by the reset or rebooting (S712).

If it is determined at operation S712 that the upgrading apparatus 600 has been restored from the error (S712-YES), the second controller 670 controls the second connector 610 to resume the periodic transmission of the heat bit signal to the display apparatus 500 (S714).

If the upgrading apparatus 600 has been not restored from the error by the reset or rebooting at operation (S712-NO), the second controller 670 according to an exemplary embodiment may transmit to the management server 30 such fact through the communication unit (not shown) of the upgrading apparatus 600 or the communication unit 560 of the display apparatus 500, and receive the remote examination from the management server 30 and restore the error.

According to an exemplary embodiment, even upon occurrence of the error from the upgrading apparatus 600, the display apparatus 500 as a spare resource performs various processes including the image processing operation without suspension to thereby minimize user's inconvenience due to the suspension of services.

The display apparatus 500 is upgraded and properly utilizes spare resources, and may continuously provide efficient services without addition of additional elements.

Although a few exemplary embodiments have been shown and described, it will be appreciated by those skilled in the art that changes may be made in these exemplary embodiments without departing from the principles of the inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display which displays an image thereon;
a first image processor which processes an image signal;
a connector which is connectable to an upgrading apparatus that is provided to upgrade the display apparatus; and
a first controller which executes a first application program and displays a first image signal corresponding to the execution of the first application program on the display, and when receiving a second image signal, corresponding to an execution of a second application program executed by the upgrading apparatus, from the upgrading apparatus through the connector, controls the display to display the second image signal together with the first image signal.

2. The display apparatus according to claim 1, wherein the first controller transmits data for the execution of the second application program to the upgrading apparatus, when the upgrading apparatus is connected through the connector.

3. The display apparatus according to claim 1, wherein the first controller receives data for the execution of the first application program from the upgrading apparatus and executes the first program, when the upgrading apparatus is connected through the connector.

4. The display apparatus according to claim 1, wherein the first image processor combines the first image signal and the second image signal, and processes the combined image signal to display on the display, and
the display apparatus further comprising:
a user interface (UI) generator which generates a menu screen displaying options for a screen combination method of the first and the second image signals; and
a user input device which receives user input corresponding to the selected user option, wherein the screen combination type comprises at least one from among picture-in-picture (PIP), picture-on-picture (POP) and picture-by-picture (PBP).

5. The display apparatus according to claim 1, further comprising a communicator which communicates with an external server and receives an application program,
wherein when the upgrading apparatus is connected and requests the application program, the first controller transmits one of inherent IDs of the display apparatus and the upgrading apparatus to the external server through the communicator and requests authorization for receiving the application program, and transmits the received application program to the upgrading apparatus.

6. The display apparatus according to claim 5, wherein the first controller identifies whether the upgrading apparatus stores a second inherent ID therein for identifying the upgrading apparatus, and if so, transmits the stored second inherent ID to the external server through the communicator.

7. The display apparatus according to claim 6, wherein a control right to the application program, which has been received from the external server and authorized through the second inherent ID, is retained by the upgrading apparatus, and
wherein the first controller is granted the control right to the application program by the upgrading apparatus and executes the application program based on the granted control right.

8. The display apparatus according to claim 5, further comprising a storage which stores therein a first inherent ID for identifying the display apparatus, wherein the first controller transmits the first inherent ID stored in the storage to the external server through the communicator if the upgrading apparatus does not store the second inherent ID therein.

9. The display apparatus according to claim 8, wherein the control right to the application program, which has been received from the external server and authorized through the first inherent ID is retained by the first controller, and the upgrading apparatus is granted the control right to the application program by the external server and executes the application program.

10. The display apparatus according to claim 1, wherein the first controller controls the connector to monitor an operation state of the upgrading apparatus, and when it is determined that there is an error in the operation of the upgrading apparatus, controls the first image processor to process the image signal.

11. The display apparatus according to claim 10, wherein the first controller controls the connector to periodically receive a predetermined signal from the upgrading apparatus, and if no signal is transmitted from the upgrading apparatus, determines that there is an error in the upgrading apparatus.

12. The display apparatus according to claim 10, wherein the first controller controls the connector to periodically transmit a predetermined signal to the upgrading apparatus, and if no response signal is received with respect to the transmitted signal, determines that there is an error in the upgrading apparatus.

13. The display apparatus according to claim 10, wherein if the error of the upgrading apparatus is detected, the first controller executes at least one application program for performing a function of the upgrading apparatus, and
wherein if it is detected that the error of the upgrading apparatus has been corrected, the first controller controls the connector to transmit an image signal from at least one image supply source to the upgrading apparatus and to receive the image signal processed by the upgrading apparatus.

14. The display apparatus according to claim 10, further comprising a communicator which communicates with a management server, wherein the first controller controls the communicator to notify the management server of the error of the upgrading apparatus.

15. A control method of a display apparatus comprising:
connecting an upgrading apparatus which is provided to upgrade the display apparatus;
executing a first application program and displaying a first image signal corresponding to the execution of the first application program;
receiving a second image signal, corresponding to an execution of a second application program that is executed by the upgrading apparatus, from the connected upgrading apparatus; and
displaying the second image signal together with the first image signal.
